(19) **Europäisches Patentamt**
**European Patent Office**
**Office européen des brevets**

(11) **EP 4 250 615 B1**

(12) **EUROPEAN PATENT SPECIFICATION**

(45) Date of publication and mention
of the grant of the patent:
**29.10.2025 Bulletin 2025/44**

(21) Application number: **23164025.1**

(22) Date of filing: **24.03.2023**

(51) International Patent Classification (IPC):
**H04L 1/1822** (2023.01)       **H04L 1/1829** (2023.01)
**H04L 1/1867** (2023.01)

(52) Cooperative Patent Classification (CPC):
**H04L 1/1822; H04L 1/1854; H04L 1/1864;**
**H04L 1/1887**

(54) **METHOD, USER EQUIPMENT AND BASE STATION FOR PERFORMING MULTIPLE RECEPTIONS OR TRANSMISSION ON MULTIPLE SERVING CELLS**

VERFAHREN, BENUTZERGERÄT UND BASISSTATION ZUR DURCHFÜHRUNG MEHRERER EMPFANGE ODER ÜBERTRAGUNG AUF MEHREREN VERSORGENDEN ZELLEN

PROCÉDÉ, ÉQUIPEMENT UTILISATEUR ET STATION DE BASE POUR EFFECTUER DE MULTIPLES RÉCEPTIONS OU TRANSMISSION SUR DE MULTIPLES CELLULES DE DESSERTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.03.2022 US 202263269958 P**

(43) Date of publication of application:
**27.09.2023 Bulletin 2023/39**

(73) Proprietor: **Sharp Kabushiki Kaisha**
**Sakai-shi, Osaka 590-8522 (JP)**

(72) Inventors:
• **WEI, Chia-Hung**
  **114 Taipei (TW)**
• **LAI, Chia-Hsin**
  **114 Taipei (TW)**
• **WANG, Hai-Han**
  **114 Taipei (TW)**
• **CHANG, Tzu-Wen**
  **114 Taipei (TW)**
• **TSAI, Hsin-Hsi**
  **114 Taipei (TW)**
• **CHIN, Heng-Li**
  **114 Taipei (TW)**
• **LI, Yen-Hua**
  **114 Taipei (TW)**
• **LIN, Wan-Chen**
  **114 Taipei (TW)**

(74) Representative: **Müller-Boré & Partner**
**Patentanwälte PartG mbB**
**Friedenheimer Brücke 21**
**80639 München (DE)**

(56) References cited:
• **QUALCOMM INCORPORATED: "Views on multi-cell PDSCH scheduling via a single DCI", vol. RAN WG1, no. E-meeting; 20201026 - 20201113, 1 November 2020 (2020-11-01), XP052351198, Retrieved from the Internet <URL:https://ftp.3gpp.org/tsg_ran/WG1_RL1/TSGR1_103-e/Docs/R1-2009278.zip R1-2009278 Multi-cell PDSCH scheduling.docx> [retrieved on 20201101]**
• **VIVO: "Discussion on joint scheduling", vol. RAN WG1, no. e-Meeting; 20210510 - 20210527, 11 May 2021 (2021-05-11), XP052006142, Retrieved from the Internet <URL:https://ftp.3gpp.org/tsg_ran/WG1_RL1/TSGR1_105-e/Docs/R1-2104392.zip R1-2104392 vivo_Discussion on joint scheduling.docx> [retrieved on 20210511]**

**Description**

<u>FIELD</u>

The present disclosure is related to wireless communication and, more particularly, to a method, a user equipment (UE), and a base station (BS) for performing a plurality of receptions or transmissions on a plurality of serving cells.

<u>BACKGROUND</u>

Various efforts have been made to improve different aspects of wireless communication for cellular wireless communication systems, such as 5G New Radio (NR), by improving data rate, latency, reliability, and mobility. The 5G NR system is designed to provide flexibility and configurability to optimize network services and types, accommodating various use cases such as enhanced Mobile Broadband (eMBB), massive Machine-Type Communication (mMTC), and Ultra-Reliable and Low-Latency Communication (URLLC). As the demand for radio access continues to increase, however, there exists a need for further improvements in the art.

Qualcomm Incorporated, "Views on multi-cell PDSCH scheduling via a single DCI", 3GPP TSG RAN WG1 Meeting #103-e, October 26th to November 13th, 2020, 3GPP Draft R1-2009278, discusses multi-cell PDSCH scheduling. The document proposes to consider DCI compression schemes that are effective for the cases where the scheduled cells are highly correlated (e.g., intra-band CA). The UE should be able to know a set of PDCCH candidates for the DCI format scheduling PDSCHs for a given set of scheduled cells, based on the higher-layer configurations, before blind decodes - NW can schedule one cell or multiple cells by the DCI format for multi-cell PDSCH scheduling. The UE monitors a set of PDCCH candidates for a DCI format that can schedule PDSCH(s) on a set of cell(s). A field in the DCI format tells the UE on which cell(s) data is actually scheduled amongst the set of cells.

vivo, "Discussion on joint scheduling", 3GPP TSG RAN WG1 #105-e, May 10th to 27th, 2021, 3GPP Draft R1-2104392, discusses issues on multi-cell scheduling, proposing to support multi-cell scheduling PDSCH with single DCI for simplified scenarios, e.g., scheduled cells with same SCS in intra-band CA.

<u>SUMMARY</u>

The above and other objects are achieved by a method, a user equipment, and a base station for performing a plurality of receptions or transmissions on a plurality of serving cells as defined in the independent claims, respectively. Preferred embodiments are set forth in the dependent claims.

<u>BRIEF DESCRIPTION OF THE DRAWINGS</u>

Aspects of the disclosure are best understood from the following detailed disclosure when read with the accompanying drawings. Various features are not drawn to scale. Dimensions of various features may be arbitrarily increased or reduced for clarity of discussion.

FIG. 1 is a timing diagram illustrating a New Data Indicator (NDI) of a HARQ process, according to an example implementation of the present disclosure.
FIG. 2 is a timing diagram illustrating that dl-DataToUL-ACKList is applied to multiple PDSCHs scheduled by a single Downlink Control Information (DCI), according to an example implementation of the present disclosure.
FIG. 3 is a flowchart illustrating a method performed by a UE for performing a plurality of receptions or transmissions on a plurality of serving cells, according to an example implementation of the present disclosure.
FIG. 4 is a flowchart illustrating a method performed by a BS for performing a plurality of receptions or transmissions on a plurality of serving cells, according to an example implementation of the present disclosure.
FIG. 5 is a block diagram illustrating a node for wireless communication, according to an example implementation of the present disclosure.

<u>DESCRIPTION</u>

Some of the acronyms used in the present application are defined as follows, unless otherwise specified:

| Acronym | Full name |
|---|---|
| 3GPP | 3rd Generation Partnership Project |

(continued)

| Acronym | Full name |
| --- | --- |
| 5G | $5^{th}$ generation |
| 5GC | 5G Core |
| Alt | Alternative |
| ACK | Acknowledge |
| AS | Access Stratum |
| BA | Bandwidth Adaptation |
| BFR | Beam Failure Recovery |
| BS | Base Station |
| BSR | Buffer Status Report |
| BWP | Bandwidth Part |
| CA | Carrier Aggregation |
| CBRA | Contention-Based Random Access |
| CC | Component Carrier |
| CCCH | Common Control Channel |
| CE | Control Element |
| CFRA | Contention-Free Random Access |
| CG | Configured Grant |
| CH | Channel |
| CORESET | Control Resource Set |
| CRC | Cyclic Redundancy Check |
| C-RNTI | Cell-Radio Network Temporary Identifier |
| CS | Cyclic Shift |
| CSI | Channel State Information |
| CS-RNTI | Configured Scheduling-Radio Network Temporary Identifier |
| CSI-RS | Channel State Information-Reference Signal |
| CSS | Common Search Space |
| DC | Dual Connectivity |
| DCI | Downlink Control Information |
| DCP | DCI with CRC scrambled by Power Saving-RNTI |
| DFI | Downlink Feedback Information |
| DG | Dynamic Grant |
| DL | Downlink |
| DL-SCH | Downlink-Shared Channel |
| DMRS | Demodulation Reference Signal |
| DRB | Data Radio Bearer |
| DRX | Discontinuous Reception |
| DTCH | Dedicated Traffic Channel |
| EN-DC | E-UTRA NR Dual Connect |
| FDD | Frequency Division Duplex |
| FR | Frequency Range |
| HARQ | Hybrid Automatic Repeat reQuest |
| ID | Identifier |
| IE | Information Element |
| LBT | Listen Before Talk |
| LCH | Logical Channel |
| LCP | Logical Channel Prioritization |
| LSB | Least Significant Bit |
| MAC | Medium Access Control |
| MAC-CE | Medium Access Control-Control Element |
| MCG | Master Cell Group |

(continued)

| Acronym | Full name |
| --- | --- |
| MPE | Maximum Permissible Exposure |
| MSB | Most Significant Bit |
| Msg | Message |
| NACK | Negative Acknowledge |
| NAS | Non-Access Stratum |
| NDI | New Data Indicator |
| NR | New Radio |
| NR-U | New Radio Unlicensed |
| NW | Network |
| NUL | Normal Uplink |
| Pcell | Primacy Cell |
| PDB | Packet Delay Budget |
| PDCCH | Physical Downlink Control Channel |
| PDCP | Packet Data Convergence Protocol |
| PDSCH | Physical Downlink Shared Channel |
| PDU | Protocol Data Unit |
| PHR | Power Headroom Reporting |
| PHY | Physical Layer |
| PRACH | Physical Random Access Channel |
| PRB | Physical Resource Block |
| PS-RNTI | Power Saving-Radio Network Temporary Identifier |
| PUCCH | Physical Uplink Control Channel |
| PUSCH | Physical Uplink Shared Channel |
| QCL | Quasi Co Location |
| RA | Random Access |
| RACH | Random Access Channel |
| RAR | Random Access Response |
| RB | Radio Bearer |
| Rel | Release |
| RLC | Radio Link Control |
| RNA | RAN Notification Area |
| RNTI | Radio Network Temporary Identifier |
| RO | RACH Occasion |
| RRC | Radio Resource Control |
| RS | Reference Signal |
| RSRP | Reference Signal Received Power |
| Rx | Reception |
| Scell | Secondary Cell |
| SCG | Secondary Cell Group |
| SCS | Subcarrier Spacing |
| SDT | Small Data Transmission |
| SDU | Service Data Unit |
| SFN | System Frame Number |
| SI | System Information |
| SIB | System Information Block |
| SL | Sidelink |
| SLIV | Start and Length Indicator Value |
| SpCell | Special Cell |
| SPS | Semi-Persistent Scheduling |
| SRB | Signaling Radio Bearer |

(continued)

| Acronym | Full name |
|---|---|
| SR | Scheduling Request |
| SRS | Sounding Reference Signal |
| SS | Search Space |
| SSB | Synchronization Signal Block |
| SS/PBCH | Synchronization Signal/Physical Broadcast Channel |
| SS-RSRP | Synchronization Signal-RSRP |
| SSSG | Search Space Set Group |
| SUL | Supplementary Uplink |
| TA | Timing Alignment or Time Advance |
| TAG | Timing Advance Group |
| TAT | Timing Alignment Timer |
| TB | Transport Block |
| TCI | Transmission Configuration Indicator |
| TDD | Time Division Duplex |
| TDRA | Time Domain Resource Allocation |
| TS | Technical Specification |
| Tx | Transmission |
| TBS | Transport Block Size |
| TRP | Transmission and Reception Point |
| UCI | Uplink Control Information |
| UE | User Equipment |
| UL | Uplink |
| USS | UE-specific Search Space |
| XR | eXtended Reality |

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art. Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and shall not be narrowly confined to what is illustrated in the drawings.

The phrases "in one implementation," or "in some implementations," may each refer to one or more of the same or different implementations. The term "coupled" is defined as connected whether directly or indirectly via intervening components and is not necessarily limited to physical connections. The term "comprising" means "including, but not necessarily limited to" and specifically indicates open-ended inclusion or membership in the so-disclosed combination, group, series or equivalent. The expression "at least one of A, B and C" or "at least one of the following: A, B and C" means "only A, or only B, or only C, or any combination of A, B and C."

For the purposes of explanation and non-limitation, specific details such as functional entities, techniques, protocols, and standards are set forth for providing an understanding of the disclosed technology. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software, or a combination of software and hardware. Disclosed functions may correspond to modules which may be software, hardware, firmware, or any combination thereof. A software implementation may include computer executable instructions stored on a computer-readable medium such as memory or other type of storage devices. One or more microprocessors or general-purpose computers with communication processing capability may be programmed with corresponding executable instructions and perform the disclosed network function(s) or algorithm(s). The microprocessors or general-purpose computers may include Application-Specific Integrated Circuits (ASICs), programmable logic arrays, and/or one or more Digital Signal Processor (DSPs). Although some of the disclosed implementations are oriented to software installed and executing on computer hardware, alternative implementations implemented as firmware, as hardware, or as a combination of hardware and software are well within the scope of the present disclosure.

The computer-readable medium includes, but is not limited to, Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture, such as a Long-Term Evolution (LTE) system, an LTE-Advanced (LTE-A) system, an LTE-Advanced Pro system, or a 5G NR Radio Access Network (RAN), typically includes at least one base station (BS), at least one UE, and one or more optional network elements that provide connection within a network. The UE communicates with the network, such as a Core Network (CN), an Evolved Packet Core (EPC) network, an Evolved Universal Terrestrial RAN (E-UTRAN), a 5G Core (5GC), or an internet via a RAN established by one or more BSs.

A UE may include, but is not limited to, a mobile station, a mobile terminal or device, or a user communication radio terminal. The UE may be a portable radio equipment that includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a RAN.

A BS may be configured to provide communication services according to at least a Radio Access Technology (RAT) such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic wideband-code division multiple access (W-CDMA), high-speed packet access (HSPA), LTE, LTE-A, evolved LTE (eLTE) that is LTE connected to 5GC, NR (often referred to as 5G), and/or LTE-A Pro. However, the present disclosure is not limited to these protocols.

The BS may include, but is not limited to, a node B (NB) in the UMTS, an evolved node B (eNB) in LTE or LTE-A, a radio network controller (RNC) in UMTS, a BS controller (BSC) in the GSM/GERAN, an ng-eNB in an Evolved Universal Terrestrial Radio Access (E-UTRA) BS in connection with 5GC, a next generation Node B (gNB) in the 5G-RAN, or any other apparatus capable of controlling radio communication and managing radio resources within a cell. The BS may serve one or more Ues via a radio interface.

The BS is operable to provide radio coverage to a specific geographical area using a plurality of cells forming the RAN. The BS supports the operations of the cells. Each cell is operable to provide services to at least one UE within its radio coverage. Each cell (often referred to as a serving cell) may provide services to one or more Ues within its radio coverage such that each cell schedules the DL and optionally UL resources to at least one UE within its radio coverage for DL and optionally UL packet transmissions. The BS can communicate with one or more Ues in the radio communication system via the plurality of cells. A cell may allocate sidelink (SL) resources for supporting Proximity Service (ProSe) or Vehicle to Everything (V2X) service. Each cell may have overlapped coverage areas with other cells.

As discussed above, the frame structure for NR supports flexible configurations for accommodating various next generation (e.g., 5G) communication requirements such as Enhanced Mobile Broadband (eMBB), Massive Machine Type Communication (mMTC), and Ultra-Reliable and Low-Latency Communication (URLLC), while fulfilling high reliability, high data rate, and low latency requirements. The Orthogonal Frequency-Division Multiplexing (OFDM) technology in the 3$^{rd}$ Generation Partnership Project (3GPP) may serve as a baseline for an NR waveform. The scalable OFDM numerology, such as adaptive sub-carrier spacing, channel bandwidth, and Cyclic Prefix (CP), may also be used. Additionally, two coding schemes are considered for NR, specifically Low-Density Parity-Check (LDPC) code and Polar Code. The coding scheme adaption may be configured based on channel conditions and/or service applications.

Moreover, it is also considered that in a transmission time interval TX of a single NR frame, downlink (DL) transmission data, a guard period, and uplink (UL) transmission data should at least be included, where the respective portions of the DL transmission data, the guard period, and the UL transmission data should also be configurable, for example, based on the network dynamics of NR. In addition, sidelink resources may also be provided in an NR frame to support ProSe services.

In addition, the terms "system" and "network" herein may be used interchangeably. The term "and/or" herein is only an association relationship for describing associated objects and represents that these relationships may exist. For example, A and/or B may indicate that: A exists alone, A and B exist at the same time, or B exists alone. In addition, the character "/" herein generally represents that the former and latter associated objects are in an "or" relationship.

Examples of some selected terms used in this disclosure are provided, as follows.

User Equipment (UE): The UE may be referred to as a PHY/MAC/RLC/PDCP/SDAP entity. The PHY-/MAC/RLC/PDCP/SDAP entity may be referred to as the UE.

Network (NW): The NW may be a network node, a TRP, a cell (e.g., SpCell, Pcell, PSCell, and/or Scell), an eNB, a gNB, and/or a base station.

Serving Cell: A Pcell, a PSCell, or an Scell. The serving cell may be an activated or a deactivated serving cell.

Special Cell (SpCell): For dual connectivity operation, the term SpCell may refer to the Pcell of the MCG or the

6

PSCell of the SCG depending on if the MAC entity is associated with the MCG or the SCG, respectively. Otherwise, the term SpCell may refer to the Pcell. A SpCell may support PUCCH transmission and contention-based Random Access, and may be always activated.

Cell: A radio network object that may be uniquely identified by a UE from a (cell) identification that is broadcasted over a geographical area from one UTRAN Access Point. A Cell may be either FDD or TDD mode.

Serving Cell: For a UE in RRC_CONNECTED not configured with CA/DC, there may be only one serving cell including the primary cell. For a UE in RRC_CONNECTED configured with CA/DC, the term "serving cells" may be used to denote the set of cells including the Special Cell(s) and all secondary cells.

CA: In Carrier Aggregation (CA), two or more Component Carriers (CCs) are aggregated. A UE may simultaneously receive or transmit on one or multiple CCs depending on its capabilities. CA may be supported for both contiguous and non-contiguous CCs. When CA is deployed, frame timing and SFN may be aligned across cells that can be aggregated. The maximum number of configured CCs for a UE may be 16 for DL and 16 for UL. When CA is configured, the UE may have one RRC connection with the network. At RRC connection establishment/re-establishment/handover, one serving cell may provide the NAS mobility information, and at RRC connection reestablishment/handover, one serving cell may provide the security input. This cell may be referred to as the Primary Cell (Pcell). Depending on UE capabilities, Secondary Cells (Scells) may be configured to form a set of serving cells together with the Pcell. The configured set of serving cells for a UE may include one Pcell and one or more Scells.

BWP: A subset of the total cell bandwidth in a cell is referred to as a Bandwidth Part (BWP), and Bandwidth Adaptation (BA) may be achieved by configuring the UE with BWP(s) and informing the UE which of the configured BWPs is currently active. To enable BA on the Pcell, the gNB may configure the UE with UL and DL BWP(s). In the case of CA, to enable BA on Scells, the gNB may configure the UE with at least DL BWP(s) (e.g., there may be none in the UL). For the Pcell, the initial BWP may be the BWP used for initial access. For the Scell(s), the initial BWP may be the BWP configured for the UE to operate first upon Scell activation. The UE may be configured with a first active uplink BWP by a firstActiveUplinkBWP IE. If the first active uplink BWP is configured for an SpCell, the firstActiveUplinkBWP IE field may include the ID of the UL BWP to be activated upon performing the RRC (re-)configuration. If the field is absent, the RRC (re-)configuration may not impose a BWP switch. If the first active uplink BWP is configured for an Scell, the firstActiveUplinkBWP IE field may include the ID of the uplink bandwidth part to be used upon MAC-activation of an Scell.

Timer: The MAC entity may set up one or more timers for various purposes, such as triggering retransmission of uplink signaling or limiting the duration of uplink signaling retransmission. A timer may be running when it is started, until it is stopped or until it expires; otherwise, it may not be running. If a timer is not running, it may be started, and if it is already running, it may be restarted. A Timer may be started or restarted from its initial value. The initial value may be configured by the gNB via downlink RRC signaling or be pre-defined/pre-determined value specified in some specifications.

PDCCH: In the downlink, the gNB may dynamically allocate resources to Ues at least via the C-RNTI/MCS-C-RNTI/CS-RNTI or some other types of RNTI on PDCCH(s). A UE may monitor the PDCCH(s) in order to find possible assignments when its downlink reception is enabled (activity governed by DRX when configured). When CA is configured, the same C-RNTI may apply to all serving cells.

PDSCH/PUSCH: The PDCCH may be used to schedule DL transmissions on PDSCH and UL transmissions on PUSCH.

Transport Block: The data from the upper layer (or MAC) given to the physical layer may be basically referred to as a transport block.

HARQ: HARQ may be a functionality that may ensure delivery between peer entities at Layer 1 (e.g., Physical Layer). A single HARQ process may support one Transport Block (TB) when the physical layer is not configured for downlink/uplink spatial multiplexing, and when the physical layer is configured for downlink/uplink spatial multiplexing, a single HARQ process may support one or multiple TBs. There may be one HARQ entity per serving cell. Each of HARQ entity may support a parallel (number) of DL and UL HARQ processes.

Hybrid automatic repeat request acknowledgement (HARQ-ACK): A HARQ-ACK information bit value of 0 may represent a negative acknowledgement (NACK), while a HARQ-ACK information bit value of 1 may represent a positive acknowledgement (ACK).

The terms "HARQ process number" and "HARQ process ID" may be interchangeably used in some implementations of the present disclosure. The terms "cell" and "serving cell" may be interchangeably used in some implementations of the present disclosure.

The New Radio (NR) wireless communication system was developed by 3GPP in Release 15 as one of representative worldwide fifth-generation (5G) mobile networks. The NR significantly improves the performance, flexibility, scalability, and efficiency of current mobile networks (e.g., 3GPP LTE). By utilizing a serial of novel mechanisms introduced for NR, a gNB (e.g., base station in NR) may provide variety types of service across diverse spectrums such as Enhanced Mobile Broadband (eMBB), Ultra-reliable and Low-latency Communications (URLLC), and Massive Machine Type Communications (mMTC). The diverse spectrum may include a Frequency Range 1 (FR1) for bands within 410 MHz-7125 MHz and a Frequency Range 2 (FR2) for bands within 24250 MHz-52600 MHz. However, the available spectrum blocks, especially in FR1, may be highly fragmented and scattered due to some of bands being used for previous cellular generation networks. In contrast, in FR2, the available spectrum may be much wider than in FR1.

How to efficiently and flexibly utilize scattered spectrum bands or wider bandwidth spectrum is an important area that needs improvement. One potential approach to support higher throughput is to apply carrier aggregation (CA) and aggregate several available narrow bands to improve DL/UL capacity. This means that the gNB may schedule multiple DL/UL transmissions among multiple cells to boost data rates. However, the CA mechanism may also introduce overhead on PDCCH since the multiple DL/UL transmissions among multiple cells may need to be indicated through multiple DCI. Increasing the number of DCI transmitted by the gNB on PDCCH may cost a huge amount of blind decoding and control element budget. Therefore, several novel designs are provided in the present disclosure to enhance the mechanism of scheduling multiple DL/UL transmissions via DCI. That is, a mechanism is provided in the present disclosure which allows the gNB to schedule multiple DL/UL transmissions via a single DCI. It may be noted that the multiple DL/UL transmissions may be on different carriers/cells.

In Rel-18, extended reality (XR) and cloud gaming (CG) may be some of the most important applications with low latency and high throughput requirements. The XR and CG use cases may be characterized by quasi-periodic traffic (with possible jitter) with high data rate in DL (e.g., video steam) combined with frequent UL (e.g., pose/control update) and/or UL video stream. Both DL and UL traffic may be also characterized by relatively strict packet delay budget (PDB).

Low latency and high throughput are important requirements, so supporting a single DCI that can schedule more than one PDSCH resource can be considered. By scheduling multiple PDSCH resources by a single DCI, the communication system can not only reduce signaling overhead but also increase data capacity. This involves determining the scheduling configuration or resource configuration for scheduling multiple PDSCHs with a single DCI.

When considering scheduling multiple PDSCHs by a single DCI, it may be necessary to determine how to apply time domain resource to each PDSCH. The time domain resource for each PDSCH may include at least one of the start and length indicator value (SLIV), the slot offset (e.g., K0) between the PDCCH detecting the DCI and the PDSCH, the slot offset (e.g., $K_1$) between the PDSCH and the HARQ-ACK timing, the slot offset (e.g., $K_2$) between the PDCCH detecting the DCI and the PUSCH, the mapping type (e.g., Type A or Type B), and the number of repetitions.

The UE may report HARQ-ACK information for a corresponding PDSCH in a slot indicated by a value of a PDSCH-to-HARQ_feedback (e.g., $K_1$). In the case of scheduling multiple PDSCHs by a single DCI, how to determine $K_1$ for each HARQ-ACK corresponding to a PDSCH should be considered.

In the New Radio (NR) wireless communication system, a downlink data reception at the UE side may be achieved by monitoring the physical downlink control channel (PDCCH) and find possible assignments. The assignment may be represented as UE-specific downlink control information (DCI). The DCI may be found on a PDCCH via blind decoding. From the perspective of blind decoding implementation, the UE may be configured with a set of PDCCH candidates within one or more CORESETs. The PDCCH candidate set for the UE to monitor may be defined in terms of PDCCH search space sets (or search space sets).

A search space set may be categorized into two types: a Common Search Space (CSS) set and a UE-Specific Search Space (USS) set. The UE may monitor PDCCH candidates based on one or more configured search spaces sets to decode a possible PDCCH transmitted by the gNB. In other words, a PDCCH may be found in the PDCCH candidates within the monitored search space sets. The UE may monitor a set of PDCCH candidates in one or more CORESETs and/or search spaces on a DL BWP (e.g., the active DL BWP on each activated serving cell or the initial BWP on a camped cell) configured with PDCCH monitoring based on corresponding search space sets where the monitoring may imply decoding each PDCCH candidate based on the monitored DCI formats. The DCI with CRC bits scrambled by a particular type of RNTI may be carried by the PDCCH, and the DCI may be found by the UE descrambling the CRC bits with the RNTI. The particular type of RNTI may be the UE-specific RNTI (e.g., C-RNTI, CS-RNTI, or MCS-C-RNTI) or a type of RNTI configured by the gNB, which may be shared by a group of Ues.

The UE may monitor PDCCH candidates within one or more CORESETs. A CORESET may be represented as a specific radio resource indicated by the gNB via one or more configurations (e.g., ControlResourceSet information element (IE)). The one or more configurations may be transmitted by the gNB to the UE via broadcast system information block (SIB) or dedicated (unicast) signaling. It may be assumed that a CORESET has a particular width in frequency domain as well as a particular width in time domain, which may be indicated by the ControlResourceSet IE. In the time domain, the CORESET may periodically appear (e.g., be allocated by the gNB). The exact positions of the CORESETs in time domain may be preconfigured by the gNB to the UE through a SearchSpace IE. Each ControlResourceSet may be indexed with a CORESET ID carried by the ControlResourceSet IE itself.

Each search space may be indexed with a SearchSpace ID which may be carried by the SearchSpace IE itself. For each configured SearchSpaces IE, it may be associated with one ControlResourceSet IE which may be indicated through the SearchSpaces IE. Hence, by providing the associated ControlResourceSet IE and SearchSpaces IE to the UE, gNB may indicate the CORESET to the UE for PDCCH monitoring. Each search space may be further categorized as a CSS or a USS, which may be indicated by the gNB to the UE via a corresponding search space. The UE may be indicated with multiple search spaces, each of which may be applied by the gNB for different purposes (for example, a search space for the purpose of random access and another search space for the purpose of normal data transmission/reception assignment).

In order to support scheduling multiple DL (or UL) transmissions via a single DCI, several scheduling-related procedures that operate in the Physical (PHY) and Medium Access Control (MAC) layers of NR may need to be improved. These scheduling-related procedures may include HARQ process, Time Domain Resource Allocation (TDRA), Carrier Indication, Bandwidth Part (BWP), Semi-persistent Scheduling (SPS) and Configured Grant (CG). In the following, a series of novel designs regarding of these procedures (e.g., scheduling-related procedures) are provided.

It may be noted that in the present disclosure, the DL transmission may be referred to as DL reception on the Physical Downlink Shared Channel (PDSCH), and the UL transmission may be referred to as a UL transmission on the Physical Uplink Shared Channel (PUSCH). It may be also noted that all newly introduced mechanisms addressed later in the present disclosure (regardless of the procedures) may be applicable to a scenario where multiple scheduled DL (or UL) transmissions may be among multiple carriers (e.g., serving cells).

The introduced mechanism(s) may be applicable for multiple PDSCH (or PUSCH) scheduling via a single DCI among multiple of serving cells. Each of the multiple PDSCH (or PUSCH) scheduling may be indicated to be transmitted/received on a serving cell. For example, if there are three PDSCH receptions scheduled by the DCI, each PDSCH may be indicated to be received on a different serving cell. Similarly, if there are three PUSCH transmissions scheduled by the DCI, each PUSCH may be indicated to be transmitted on a different serving cell. The DCI may be received by the UE on a particular PDCCH transmitted by the gNB on a particular CORESET defined in present disclosure. In the present disclosure, DL scheduling may be referred to as "a DL assignment," and UL scheduling may be referred to as "a UL grant."

### Enhanced HARQ mechanism - HARQ process ID

In New Radio (NR), a MAC entity of a UE may include a number of HARQ entities, and each HARQ entity may be associated with a configured serving cell. Each HARQ entity may support more than one (parallel) DL and/or UL HARQ process. In the case of CA, the multi-carrier nature of the physical layer may be only exposed to the MAC layer, for which one HARQ entity may be required per serving cell. In both uplink and downlink, there may be one independent HARQ entity per serving cell, and one transport block (TB) may be generated per assignment (DL scheduling)/grant (UL scheduling) per serving cell. Each TB and its potential HARQ retransmissions may be mapped to a single serving cell.

While receiving DL data on PDSCH from the gNB, a DL HARQ process may be at least responsible for determining whether each data reception is a new transmission or retransmission, decoding received DL data and come out corresponding TB, buffering each received data and soft combining the received data, and performing HARQ feedback.

While transmitting UL data on PUSCH to the gNB, a UL HARQ process may be at least responsible for buffering each transmitted data and performing HARQ retransmission.

A HARQ process number field may be carried by several DCI formats (e.g., DCI 0_0, DCI 0_1, DCI 0_2, DCI 1_0, DCI 1_1, and DCI 1_2) defined for legacy NR. The HARQ process number may indicate a HARQ process of a HARQ entity of the scheduled cell to a UE. In short, the gNB may indicate a HARQ process to be applied for handling the TB of each scheduled PDSCH/PUSCH to a UE. The HARQ process may be indicated by the HARQ process number field in the DCI. However, based on legacy HARQ modeling, it may not be clear how the HARQ process of the multiple scheduled PDSCHs/PUSCHs are implemented. For example, it may not be clear which HARQ process of a HARQ entity of a scheduled serving cell (e.g., a cell which is scheduled for the PDSCH/PUSCH) is applied to the corresponding TB of the PDSCH/PUSCH. Specifically, it may not be clear how the UE is indicated, by a single DCI, with a HARQ process number for each of the multiple scheduled PDSCHs/PUSCHs. Some implementations are provided in the following.

(I) Extend HARQ process number field: a HARQ process number field in the DCI (e.g., scheduling DCI) which schedules multiple PDSCHs/PUSCHs may be extended. For example, the gNB may include multiple bitmaps in the scheduling DCI, and each bitmap may be associated with a PDSCH/PUSCH of the multiple scheduled PDSCHs/PUSCHs. The value of the bitmap may indicate a HARQ process to a UE.

In some implementations, the total number of the bits of the HARQ process number field may be determined by the UE based on the number of PDSCHs/PUSCHs scheduled by the scheduling DCI. The number of PDSCHs/PUSCHs scheduled by the scheduling DCI may be indicated by the scheduling DCI or preconfigured by the gNB via RRC signaling. For example, the UE may be configured with a group of serving cells specific to the multiple PDSCH/PUSCH scheduling.

In some implementations, the group of serving cells (or the multiple serving cells) of the number of PDSCHs/PUSCHs scheduled by the scheduling DCI may be indicated by a DCI field corresponding to the serving cells in the scheduling DCI.

The number of PDSCHs/PUSCHs scheduled by the scheduling DCI may be determined by the number of the cells of the group of serving cells (or the multiple serving cells). In legacy NR, the HARQ process number field may have four bits (e.g., $b_1b_2b_3b_4$). The value of the four bits may indicate one of the 16 configured HARQ processes to the UE. For example, the $b_1b_2b_3b_4$ sets to 0001 may indicate HARQ process 1, $b_1b_2b_3b_4$ sets to 0010 may indicate HARQ process 2, and so on. For example, in the case of multiple PDSCH/PUSCH scheduling, there may be three serving cells are preconfigured as a group for the multiple PDSCH/PUSCH scheduling, and the number of the bits of the HARQ process number field may be extended to 12 bits (e.g., $b_1b_2b_3b_4b_5b_6b_7b_8b_9b_{10}b_{11}b_{12}$). The first four bits (e.g., $b_1b_2b_3b_4$) may indicate a HARQ process for a first scheduled PDSCH/PUSCH of the scheduling DCI. The following four bits (e.g., $b_5b_6b_7b_8$) may indicate a HARQ process for a second scheduled PDSCH/PUSCH of the scheduling DCI. The last four bits (e.g., $b_9b_{10}b_{11}b_{12}$) may indicate a HARQ process for a third scheduled PDSCH/PUSCH of the scheduling DCI. The number of bits for the first scheduled PDSCH/PUSCH, second scheduled PDSCH/PUSCH, and third scheduled PDSCH/PUSCH may be determined based on the number of HARQ processes configured for each of the serving cells. For example, if there are 8 HARQ processes configured for a serving cell, the number of the bits may be determined as 3.

In some implementations, if there are 16 HARQ processes configured for a serving cell, each four bits of the HARQ process number field may be associated with a cell of the group of serving cells based on the cell index in ascending/descending order. For example, the first four bits associated with a cell of the group of serving cells may have the smallest cell index. The second four bits associated with a cell of the group of serving cells may have the second smallest cell index.

(II) Static HARQ process number: the UE may be indicated to handle each multiple scheduled PDSCHs/PUSCHs corresponding to each of the scheduled cells by one or multiple static HARQ processes of each of the scheduled cells. In some implementations, each scheduled cell may apply HARQ process(es) with the same ID. For example, the gNB may explicitly indicate a HARQ process ID to the UE in scheduling DCI. The scheduling DCI may indicate multiple PDSCHs/PUSCHs among multiple cells. For each PDSCH/PUSCH, the UE may handle the TB of the PDSCH/PUSCH of each cell by a HARQ process having the ID indicated by the HARQ process number field in the scheduling DCI. That is, all the TBs of the PDSCHs/PUSCHs of all scheduled cells may be handled by the HARQ processes of each scheduled cell that has the HARQ process ID indicated by the HARQ process number in the scheduling DCI.

In some implementations, the UE may be indicated with a HARQ process number by the scheduling DCI (via the HARQ process number field). In each scheduled cell, the UE may handle a TB by a HARQ process having a HARQ number indicated by the HARQ process number field. For example, the UE may be indicated with a HARQ process number by the scheduling DCI (via HARQ process number field) and the HARQ process number may be represented as x. The scheduled DCI may indicate to the UE to receive first PDSCH, second PDSCH, and third PDSCH on cell 1, 2 and 3, respectively. In cell 1, the UE may handle a TB of the first PDSCH by a HARQ process number x of the cell 1. In cell 2, the UE may handle a TB of the second PDSCH by a HARQ process number x of the cell 2. In cell 3, the UE may handle a TB of the third PDSCH by a HARQ process number x of the cell 3.

In some implementations, the UE may be indicated with a static HARQ process number by a preconfigured RRC parameter received from the gNB. In each scheduled cell, the UE may handle a TB by a HARQ process having a HARQ number indicated by the preconfigured RRC parameter. For example, the UE may be indicated with a HARQ process number by the preconfigured RRC parameter and the HARQ process number may be represented as x. The scheduling DCI may indicate the UE to receive a first PDSCH, a second PDSCH, and a third PDSCH on cell 1, 2 and 3, respectively. In cell 1, the UE may handle a TB of the first PDSCH by a HARQ process number x of cell 1. In cell 2, the UE may handle a TB of the second PDSCH by a HARQ process number x of cell 2. In cell 3, the UE may handle a TB of the third PDSCH by a HARQ process number x of cell 3. In some implementations, the static HARQ process number may be a pre-defined number.

In some implementations, when a UE is scheduled with multiple PDSCHs/PUSCHs among multiple serving cells, each PDSCH/PUSCH of the multiple scheduled PDSCHs/PUSCHs may be handled by a static HARQ process or one of multiple static HARQ processes in each scheduled cell. The number of static HARQ processes per serving cell may be pre-configured by the gNB via dedicated downlink RRC signaling. In some implementations, the number of static HARQ processes may be per serving cell or per serving cell group configured by the gNB. That is, the number of configured static HARQ processes in each serving cell may be different.

In addition, there may be a pre-defined number of static HARQ processes for each cell. That is, when a serving cell which is not configured with a number of static HARQ processes (via downlink RRC signaling) by the gNB, the UE may determine the number of static HARQ processes of the serving cell as the pre-defined number. For example, when the gNB indicates a number (e.g., NS) of static HARQ process for a serving cell to the UE, it may imply that NS HARQ processes with the lowest/highest HARQ process IDs are indicated as static HARQ processes. For example, the HARQ processes with ID of 1 to NS or 0 to NS-1 are indicated as static HARQ processes.

The number of the bits of the HARQ process number field may be determined based on the total number of static HARQ processes for each cell. For example, if there are three cells (Cell 1, Cell 2, and Cell 3), each of Cell 1, Cell 2, and Cell 3 may be determined to have 4 static HARQ processes. The gNB may allocate two bits for each of Cell 1, Cell 2, and Cell 3 to indicate which static HARQ process is applied for each cell. For example, the two bits corresponding to a cell set to "00" may imply that the HARQ process with the lowest ID among the configured static HARQ processes of the cell is indicated. The two bits corresponding to a cell set to "01" may imply that the HARQ process with the second lowest ID among the configured static HARQ processes of the cell is indicated, and so on.

The two bits corresponding to a cell set to "00" may imply that the HARQ process with ID of 0 is indicated, and the two bits corresponding to a cell set to "01" may imply that the HARQ process with ID of 1 is indicated, and so on. If the HARQ process number field includes 6 bits (e.g., $b_1 b_2 b_3 b_4 b_5 b_6$), the first two bits $b_1 b_2$ may be used to refer to Cell 1, and the next two bits $b_3 b_4$ may be used to refer to Cell 2, and the last two bits $b_5 b_6$ may be used to refer to Cell 3. The number of static HARQ processes for each cell may be different.

The bit streams of the HARQ process number field may be mapped to each cell based on a particular rule. The particular rule may be defined based on the value of cell ID of each scheduled cell. For example, if three cells are scheduled (e.g., Cell 2, Cell 4, and Cell 5), and the static number of HARQ processes for Cell 2, Cell 4 and Cell 5 are 2, 4, and 8, respectively, then there may be a total of 6 bits (e.g., $b_1 b_2 b_3 b_4 b_5 b_6$) for the HARQ process number field, with one bit for Cell 2, two bits for Cell 4, and three bits for Cell 5. Bit $b_1$ may be used to refer to Cell 2 since Cell 2 has the smallest cell ID among the three scheduled cells. Bits $b_2$ and $b_3$ may be used to refer to Cell 4 since Cell 4 has the second smallest cell ID among the three scheduled cells. Bits $b_4$, $b_5$ and $b_6$ may be used to refer to Cell 5 since Cell 5 has the largest cell ID among the three scheduled cells.

In some implementations, the static HARQ process number may only be applied for a subset of cells scheduled by the scheduling DCI. For example, the UE may be indicated by RRC or MAC with one or more cells which may apply the static HARQ process number indication. That is, when the UE receives DCI scheduling multiple PDSCHs/PUSCHs among cells, the UE may apply a static HARQ process number for a subset of scheduled cells, and rest of the scheduled cells may be applied a HARQ process indicated by a legacy HARQ process number field. The subset may be preconfigured by DL RRC signaling or DL MAC CE. Hence, the subset of cells may be dynamically changed via RRC reconfiguration or DL MAC CE (e.g., the gNB transmits another DL MAC CE to change the subsets).

In some implementations, the subset of cells may be implicitly determined by the UE. For example, the subset of cells may be the cells except for a specific cell (e.g., Pcell or cell configured with PUCCH). That is, when the UE receives DCI scheduling multiple PDSCHs/PUSCHs among Pcell, Scell 1, and Scell 2, the UE may apply a static HARQ process number for Scell 1 and Scell 2, and the Pcell cell may apply the HARQ process indicated by the legacy HARQ process number field. In some implementations, the static HARQ process number may be indicated by one or more fields different from the legacy HARQ process number field of the scheduling DCI.

In some implementations, the total number of the bits of the HARQ process number field may be determined based on the number of activated cells and/or cells whose active BWP is not a dormant BWP. For example, the UE may be configured with four serving cells, but only three cells are currently activated. Hence, the number of bits of the HARQ process number field may be determined based on the three activated cells.

(III) Semi-static HARQ process number: the UE may be configured by the gNB (or defined in the technical specification) with multiple sets of HARQ process indexes. Each set of HARQ process indexes may include one or more HARQ process indexes. Each HARQ process index may be associated with a scheduled cell. The UE may handle the scheduled PDSCH/PUSCH of a cell by a HARQ process indicated by a HARQ process index associated with the cell.

In some implementations, the UE may be configured by the gNB via DL RRC configuration (or defined in the technical specification) with multiple sets of HARQ process indexes. Each set of HARQ process indexes may include one or more HARQ process indexes. The set of HARQ process indexes to be applied by the UE may be indicated by the gNB via DCI or a DL MAC CE. In some implementations, while configuring the multiple sets of HARQ process indexes, the gNB may also indicate a default set of HARQ process indexes to the UE. That is, before receiving an indicator indicating one of the multiple sets of HARQ process indexes, the UE may apply the default set of HARQ process indexes.

Each HARQ process index in the indicated set of HARQ process indexes may be associated with a scheduled cell, and the UE may handle the scheduled PDSCH/PUSCH of a cell by a HARQ process indicated by a HARQ process index associated with the cell. Each HARQ process index in a set may be one-to-one associated with each scheduled cell in ascending or descending order based on the cell index of each scheduled cell. For example, when the UE receives DCI scheduling multiple PDSCHs/PUSCHs among Cell x, Cell y, and Cell z (wherein the x, y, and z are cell indexes, and x<y<z), and a set of HARQ process indexes {a, b, c} is indicated, the HARQ process index a of the set may be mapped to Cell x, the HARQ process index b of the set may be mapped to Cell y, and the HARQ process index c of the set may be mapped to Cell z.

**Enhanced HARQ mechanism - HARQ retransmission**

The HARQ retransmission may be implemented on above of HARQ processing mechanism built in the MAC entity and PHY layer. The HARQ retransmission may be triggered by the gNB based on the received HARQ-ACK signaling feedback from the UE. It may be noted that the HARQ-ACK feedback in NR may be just a terminology that represents that the UE performs feedback for a status of particular DL data reception and decoding. That is, during the HARQ-ACK feedback, the UE may transmit either ACK or NACK. For example, when the UE successfully received and decoded the DL data, the UE may transmit ACK during HARQ-ACK feedback. Otherwise, the UE may transmit NACK during HARQ-ACK feedback for the failure of data reception and decoding.

In the following, a basic model of HARQ processing for unicast DL data reception is described. Firstly, the UE may monitor PDCCH candidates based on the gNB's configuration. A downlink assignment may be received on the PDCCH. That is, a UE's specific DCI (e.g., with CRC scrambled by the UE's specific RNTI (e.g., C-RNTI)) may be decoded on the PDCCH. The MAC entity may be indicated by PHY about the reception of the downlink assignment on the PDCCH. PDSCH reception assignment (e.g., indicated by the DL assignment) and HARQ information including a new data indicator (NDI) may be delivered from the PHY to the MAC entity. The NDI may be an information field carried by the received DCI. The MAC entity may evaluate the purpose and the type of the DL assignment. The purpose and type evaluation mentioned in the present disclosure may mean that the MAC entity evaluates whether the downlink assignment is for MAC entity's C-RNTI and/or the NDI has been toggled or not.

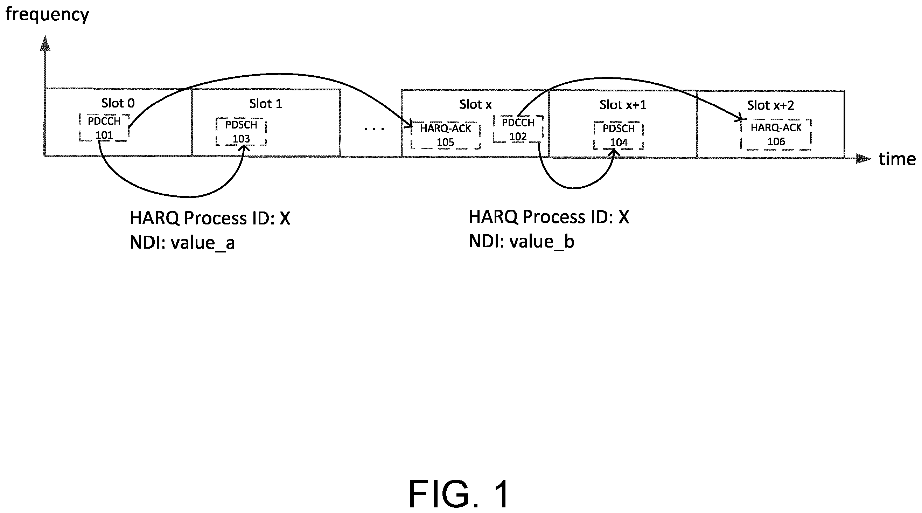

FIG. 1 is a timing diagram illustrating an NDI of a HARQ process, according to an example implementation of the present disclosure. As illustrated in FIG. 1, a UE may receive DCI on PDCCH 102 from a gNB within slot x. The DCI received on the PDCCH 102 may schedule a PDSCH reception (e.g., PDSCH 104) and an uplink resource for corresponding HARQ-ACK feedback 106 on slot x+1 and slot x+2, respectively. Within the DCI received on the PDCCH 102, the UE may be indicated with a HARQ process ID (e.g., X) and an NDI value (e.g., value_b). It may imply that the HARQ process X is indicated by the gNB for handling corresponding data reception of the PDSCH 104. It may be noted that the HARQ process X was assigned by the gNB, via DCI received on PDCCH 101. The DCI received on the PDCCH 101 may schedule a PDSCH reception (e.g., PDSCH 103) and an uplink resource for corresponding HARQ-ACK feedback 105 on slot 1 and slot x respectively. The DCI received on the PDCCH 101 is for another PDSCH reception (e.g., PDSCH 103) in slot 1 earlier than the PDCCH 102. The DCI received on the PDCCH 101 may indicate an NDI value (e.g., value_a). Regarding the reception of PDCCH 102, the UE may evaluate whether the NDI value has been toggled or not by comparing value_b with value_a. In some implementations, the NDI may be set to "0" or set to "1." The NDI have been toggled may mean that the value_b is different from the value_a. For example, the value_b and the value_a may be "0 and 1" or "1 and 0." After the evaluation, when the NDI of DCI received on the PDCCH 102 is considered as toggled, the PDSCH 104 may be considered as a new/initial transmission. When the NDI of DCI received on the PDCCH 102 is considered as non-toggled, the PDSCH 104 may be considered as a retransmission.

For the basic model of HARQ processing, the MAC entity may indicate the presence of the DL assignment and deliver the HARQ information to the HARQ entity. It may be noted that the TB received on the PDSCH may be delivered from the PHY to the MAC entity at a time after the PDSCH reception (e.g., the end of the PDSCH in time domain). The MAC entity may allocate the TB and the HARQ information to a HARQ process indicated by the HARQ information. The HARQ process may evaluate whether the NDI has been toggled and if the DL assignment is a new transmission, the MAC may attempt (e.g., to instruct the PHY) to decode the received data. If the DL assignment is a retransmission and if the data has not yet been successfully decoded, the MAC entity may instruct the PHY to combine the received data with the data currently in the soft buffer for this TB and then attempt to decode the combined data. Per the MAC entity's instruction, the PHY may decode the received data and feedback the decoded result to the MAC entity. If the data was successfully decoded, the MAC entity may deliver the decoded MAC PDU to a disassembly and demultiplexing entity and instruct the physical layer to generate acknowledgement(s) of the data in this TB. That is, the MAC entity may instruct PHY to perform HARQ-ACK feedback. If the data was not successfully decoded, the MAC entity may instruct the PHY to replace the data in the soft buffer with the data which the MAC entity attempts to decode. Then, the MAC entity may instruct the physical layer to generate acknowledgement(s) of the data in this TB. That is, the MAC entity may instruct PHY to perform HARQ-ACK feedback.

However, based on legacy HARQ modeling, it may not be clear how the determination of a new/initial transmission of the multiple scheduled PDSCHs/PUSCHs is to be implemented. For example, it may not be clear how the multiple scheduled PDSCHs/PUSCHs is determined as a new/initial transmission by a New Data Indicator (NDI) field of the scheduled DCI. Some implementations are provided in the following.

(I) Extend New Data Indicator field: an NDI field of DCI (e.g., the scheduling DCI) which schedules multiple PDSCHs/PUSCHs may be extended. For example, the gNB may explicitly include multiple bits in the scheduling DCI, and each bit may be associated with a PDSCH/PUSCH of the multiple scheduled PDSCHs/PUSCHs. The value of the bit may indicate an NDI value to the UE.

In some implementations, the total number of the bits of the NDI field may be determined by the UE based on the number of PDSCHs/PUSCHs scheduled by the scheduling DCI. The number of PDSCHs/PUSCHs scheduled by the scheduling DCI may be indicated by the scheduling DCI itself or preconfigured by the gNB via RRC signaling. For example, the UE may be configured with a group of serving cells specific to the multiple PDSCH/PUSCH scheduling. The number of PDSCHs/PUSCHs scheduled by the scheduling DCI may be determined by the number of the cells of the group of serving cells. In legacy NR, the NDI field may have one bit (e.g., $b_1$). The value of the bit may indicate an NDI value to the UE. For example, the bit $b_1$ set to 1 may mean that the NDI value is indicated as 1, and the bit $b_1$ set to 0 may mean that the NDI value is indicated as 0. For example, in case of multiple PDSCH/PUSCH scheduling, if three serving cells are preconfigured as a group for the multiple PDSCH/PUSCH scheduling, then the number of the bits of the NDI field may be extended to 3 bits (e.g., $b_1 b_2 b_3$). The first bit (e.g., $b_1$) may indicate an NDI value for the first scheduled PDSCH/PUSCH of the scheduling DCI. The second bit (e.g., $b_2$) may indicate an NDI value for the second scheduled PDSCH/PUSCH of the scheduling DCI.

The last bit (e.g., $b_3$) may indicate an NDI value for the third scheduled PDSCH/PUSCH of the scheduling DCI.

In some implementations, the number of bits of the NDI field may also be determined based on the static number of HARQ process of each scheduled cell according to the implementations introduced for HARQ process in the present disclosure.

In some implementations, the UE may be configured with a group of serving cells specific to the multiple PDSCH/PUSCH scheduling. The total number of bits of the NDI field may be determined based on the number of configured and activated cells within the group.

In some implementations, the UE may be configured with a group of serving cells specific to the multiple PDSCH/PUSCH scheduling. The total number of bits of the NDI field may be determined based on the number of configured serving cells in the group whose current active BWP is not a dormant BWP.

(II) Ignore New Data Indicator field: the UE may always determine the multiple scheduled PDSCHs/PUSCHs as new transmissions regardless of the value indicated by the NDI field.

In some implementations, the UE may determine whether a scheduled PDSCH/PUSCH is an initial transmission/retransmission based on whether the scheduled PDSCH/PUSCH is scheduled by DCI which schedules multiple PDSCHs/PUSCHs. For example, if the UE receives DCI indicating a PDSCH reception/PUSCH transmission, regardless of the NDI value carried by the DCI, the UE may determine that the PUSCH is an initial transmission if the DCI schedules multiple PDSCHs/PUSCHs.

In some implementations, the UE may determine whether a scheduled PDSCH/PUSCH is an initial transmission/retransmission based on whether the scheduled PDSCH/PUSCH is scheduled to be transmitted on a specific cell and the scheduled PDSCH/PUSCH is scheduled by a DCI which schedules multiple PDSCHs/PUSCHs. The specific cell may be a Pcell, PSCell, or a cell configured with PUCCH.

In some implementations, the UE may determine whether a scheduled PDSCH/PUSCH is an initial transmission/retransmission based on whether the scheduled PDSCH/PUSCH is scheduled by DCI which schedules multiple PDSCHs/PUSCHs, and whether the HARQ process indicated to be applied for handling the scheduled PDSCH/PUSCH is the same as a HARQ process applied for handling multiple PDSCHs/PUSCHs. For example, when a UE receives DCI indicating a PDSCH reception and the DCI schedules multiple PDSCH receptions at the same time, the PDSCH reception may be indicated to be handled by HARQ process x. The UE may determine whether the PDSCH reception was an initial transmission/retransmission based on whether the HARQ process x was previously indicated to be applied to handle a PDSCH of other multiple scheduled PDSCHs. In this case, the UE may determine that the PDSCH reception was an initial transmission.

In some implementations, the total number of the bits of the NDI field may be determined based on the number of activated cells and/or cells whose active BWP is not a dormant BWP. For example, if the UE is configured with four serving cells but only three cells are currently activated, the number of bits of the NDI field may be determined based on the three activated cells.

## TDRA information indication

In NR, a time domain relation between PDCCH and PDSCH may be determined by the UE based on a time domain resource allocation (TDRA) table pre-configured by DL RRC signaling and a time domain resource assignment indicator (field) carried by scheduling DCI which schedules the PDSCH reception. The TDRA table may include multiple sets of $K_0$, S, and L. $K_0$ may be represented as slot offset between DCI and its scheduled PDSCH. S may be represented as a starting symbol of the PDSCH reception. L may be represented as a length of PDSCH. S and L may also be indicated via a start and length indicator (SLIV). In current NR, the UE may be configured with multiple of TDRA tables. For example, a TDRA table may be configured for a serving cell (e.g., cell-specific TDRA table), and optionally be configured with a TDRA table for each configured BWP (e.g., BWP-specific TDRA table). The configured TDRA tables to be applied for PDSCH scheduling may be determined based on whether there is a BWP-specific TDRA table configured for the BWP on which the PDSCH is indicated to be received. However, since multiple PDSCHs/PUSCHs are scheduled via a single DCI, it may not be clear how the UE is indicated with TDRA information for the multiple scheduled PDSCHs/PUSCHs by the TDRA field in the scheduling DCI.

(I) Extend TDRA field: the TDRA field in DCI (e.g., scheduling DCI) which schedules multiple PDSCHs/PUSCHs may be extended. For example, the gNB may explicitly include multiple bitmaps in the scheduling DCI, and each bitmap may be associated with a PDSCH/PUSCH of the multiple scheduled PDSCHs/PUSCHs. The value of the bitmap may indicate an entry of a TDRA to the UE. Each entry of the TDRA may indicate $K_0$, S, and L.

In some implementations, the total number of the bits of the TDRA field may be determined by the UE based on the number of PDSCHs/PUSCHs scheduled by the scheduling DCI. The number of PDSCHs/PUSCHs scheduled by the scheduling DCI may be indicated by the scheduling DCI itself or preconfigured by the gNB via RRC signaling. For example, the UE may be configured with a group of serving cells specific to the multiple PDSCH/PUSCH scheduling. The number of PDSCHs/PUSCHs scheduled by the scheduling DCI may be determined by the number of the cells of the group of serving cells.

In legacy NR, the TDRA field may have a flexible bit length determined based on the number of entries configured in an applied TDRA table. If the length of the field is determined as four bits (e.g., $b_1b_2b_3b_4$), the value of the four bits may indicate one of the entries of the applied TDRA table to the UE. For example, $b_1b_2b_3b_4$ set to 0001 may mean the first entry of the applied TDRA table, $b_1b_2b_3b_4$ set to 0010 may mean the second entry of the applied TDRA table, and so on.

In some implementations, the number of TDRA fields may be determined based on the number of entries configured in an applied TDRA table of each scheduled cell. For example, in multiple PDSCH/PUSCH scheduling, if three serving cells are preconfigured as a group for the multiple PDSCH/PUSCH scheduling, and each of the three cells has 16 entries of applied TDRA table, the number of the bits of the TDRA field may be extended to 12 bits (e.g., $b_1b_2b_3b_4b_5b_6b_7b_8$ $b_9b_{10}b_{11}b_{12}$). The mapping of the bitstreams of the TDRA field and each cell may be based on the value of the cell ID. For example, the first four bits (e.g., $b_1b_2b_3b_4$) may indicate an entry for the first scheduled PDSCH/PUSCH on the cell with the smallest cell ID. The following four bits (e.g., $b_5b_6b_7b_8$) may indicate an entry for the second scheduled PDSCH/PUSCH on the cell with the second smallest cell ID. The last four bits (e.g., $b_9b_{10}b_{11}b_{12}$) may indicate an entry for the third scheduled PDSCH/PUSCH on the cell with the largest cell ID.

In some implementations, the total number of the bits of the TDRA field may be determined based on the number of activated cells and/or cells whose active BWP is not a dormant BWP. For example, if the UE is configured with four serving cells but only three cells are currently activated, the number of bits of the TDRA field may be determined based on the three activated cells. It may be noted that the number of entries of applied TDRA table of each cell may be different.

In some implementations, a subset of entries of the TDRA table of each cell may be pre-configured or pre-defined by the gNB. The subset of entries per serving cell may be pre-configured by the gNB via dedicated downlink RRC signaling. In some implementations, the subset of entries may be per serving cell or per serving cell group configured by the gNB. That is, the number of subsets of entries in each serving cell may be different.

In addition, there may be a pre-defined subset of entries for each cell. That is, when a serving cell is not configured with a subset of entries (via downlink RRC signaling) by the gNB, the UE may apply the subset of entries of the serving cell as the pre-defined subset. In some implementations, the gNB may indicate a number of entries for each cell to the UE. For example, when the gNB indicates a number (e.g., NE) of entries for a serving cell to the UE, it may imply NE entries with the lowest/highest ID are indicated as the subset of entries. For example, entries with ID of 1 to NE or 0 to NE -1 are indicated as the subset of entries.

The number of the bits of the TDRA field may be determined based on the total number of the subset of entries for each cell. For example, if there are three cells (Cell 1, Cell 2, and Cell 3), all of Cell 1, Cell 2, and Cell 3 may be determined to have 4 entries in each cell. The gNB may allocate two bits for each of Cell 1, Cell 2, and Cell 3 to indicate which entry is applied for each cell. For example, the two bits corresponding to a cell set to "00" may imply that the entry with the lowest ID among the configured subset of entries of the cell is indicated. The two bits corresponding to a cell set to "01" may imply that the entry with the second lowest ID among the subset of entries of the cell is indicated, and so on.

The two bits corresponding to a cell set to "00" may imply that the entry with ID of 0 is indicated, and the two bits corresponding to a cell set to "01" may imply that the entry with ID of 1 is indicated, and so on. If the TDRA field includes 6 bits (e.g., $b_1b_2b_3b_4b_5b_6$), the first two bits $b_1b_2$ may be used to refer to Cell 1, and the next two bits $b_3b_4$ may be used to refer to Cell 2 and the last two bits $b_5b_6$ may be used to refer to Cell 3. The number of TDRA field for each cell may be different.

The bit streams of the TDRA field may be mapped to each cell based on a particular rule. The particular rule may be defined based on the value of cell ID of each scheduled cell. For example, if three cells are scheduled (e.g., Cell 2, Cell 4, and Cell 5), and the number of entries of the subset of entries for Cell 2, Cell 4, and Cell 5 are 2, 4, and 8, respectively, then there may be 6 bits (e.g., $b_1b_2b_3b_4b_5b_6$) in total for the TDRA field, with one bit for Cell 2, two bits for Cell 4, and three bits for Cell 5. Bit $b_1$ may be used to refer to Cell 2 since Cell 2 has the smallest cell ID among the three scheduled cells. Bits $b_2$ and $b_3$ may be used to refer to Cell 4 since Cell 4 has the second smallest cell ID among the three scheduled cells. Bits $b_4$, $b_5$, and $b_6$ may be used to refer to Cell 5 since Cell 5 has the largest cell ID among the three scheduled cells.

(II) Static TDRA indication: all the multiple scheduled PDSCHs/PUSCHs may refer to the single TDRA field carried by the scheduling DCI.

In some implementations, the gNB may explicitly indicate a TDRA field in a scheduling DCI to the UE. The scheduling DCI may indicate multiple (or a plurality of) PDSCHs/PUSCHs among multiple (or a plurality of) serving cells. For each PDSCH/PUSCH, the UE may determine the TDRA information of the TB of PDSCH/PUSCH of each serving cell by referring to the TDRA field in the scheduling DCI. That is, all the scheduled PDSCHs/PUSCHs may refer to the same TDRA field.

**Referring to a TDRA table**

The UE may be configured with multiple TDRA tables for each cell. However, since multiple PDSCHs/PUSCHs are scheduled via a single DCI, it may not be clear how the UE determines which TDRA table should be applied for the multiple scheduled PDSCHs/PUSCHs.

(I) TDRA cell group: the UE may be configured with a TDRA cell group by DL RRC signaling. That is, one or more cells may be indicated by the gNB to be treated as a TDRA group. A specific TDRA table may be additionally configured for the TDRA group. In some implementations, only cells in the same band may be configured within the same TDRA group. In some implementations, the TDRA group may be determined implicitly. For example, for the cells not configured with TDRA tables, the TDRA table of the Pcell may be applied. For example, if DCI schedules multiple PDSCHs/PUSCHs on Pcell, Scell 1, Scell 2, and Scell 3, and if Scell 1 and Scell2 are configured with TDRA tables, there may be 3 TDRA groups. That is, Scell 3 may be in the same TDRA group (e.g., first TDRA group) as the Pcell, since Scell 3 is not configured with a TDRA table. Scell 1 may be in the second TDRA group, and Scell 2 may be in the third TDRA group.

In some implementations, the configured serving cells may be indicated by the gNB to be treated as one or more multiple TDRA group(s). The UE may be configured with a TDRA group-specific TDRA table for each of the TDRA groups. When the UE receives DCI scheduling multiple PDSCHs/PUSCHs, the UE may apply the TDRA table configured for a particular TDRA group which is associated with cells for the scheduled PDSCHs/PUSCHs. For example, the UE may be configured with six serving cells (e.g., Cell 1 to Cell 6). Cell 1, Cell 2, and Cell 3 may be grouped as a first TDRA group, and Cell 4, Cell 5, and Cell 6 may be grouped as a second TDRA group. The first TDRA table and the second TDRA table may be configured for the first and second TDRA group, respectively. When a PDSCH is scheduled to be received on Cell 2, the UE may apply the TDRA configured for the first TDRA group for the PDSCH reception. When the UE receives DCI scheduling multiple PDSCH receptions on Cell 1, Cell 2, and Cell 5, the UE may apply the TDRA configured for the first TDRA group for the PDSCH receptions of Cell 1 and Cell 2, and the UE may apply the TDRA configured for the second TDRA group for the PDSCH reception of Cell 5.

(II) List of TDRA tables: the UE may be configured with a list of TDRA tables in the cell where the DCI that can schedule multiple PDSCHs/PUSCHs is monitored. Each TDRA table may correspond to one cell that can be scheduled. The number of TDRA tables in the list may be less than or equal to the number of cells that can be scheduled by the DCI. For example, a TDRA table associated with a cell may be configured in the list when the PDSCH-Config or PUSCH-Config for the cell does not include the TDRA table.

**FDRA information indication**

In NR, the allocated frequency resource for a scheduled PDSCH or PUSCH may be indicated via the frequency domain resource allocation (FDRA) field. To schedule multiple PDSCHs/PUSCHs on multiple cells, the FDRA field may need to be extended or separate FDRA fields for the multiple cells may need to be defined. For example, if Pcell, Scell 1, and Scell 2 are scheduled by DCI, the FDRA field may include three set of bits. The first set of bits may include a number of bits that are determined based on the BWP scheduled on the Pcell, the second set of bits may include a number of bits that are determined based on the BWP scheduled on Scell 1, and the third set of bits may include a number of bits that are determined based on the BWP scheduled on Scell 2. Some sets of bits of the FDRA field may be set to an invalid value to indicate that a PDSCH or a PUSCH is not scheduled on the cell corresponding to the sets of bits. For resource allocation type 0 or for dynamic indication of resource allocation type, the invalid value may be all '0's. For resource allocation type 1, the invalid value may be all '1's. To avoid PDCCH resource wastage, the UE may not be scheduled by the DCI with only one valid FDRA value. For example, when the DCI schedules 3 cells, the UE may determine that the FDRA values for at least three cells are valid.

When the DCI triggers an aperiodic CSI report by setting the CSI request field in the DCI to a non-zero value, the UE may multiplex the triggered aperiodic CSI report to the PUSCH on the cell with the lowest cell index. If PUSCHs on some of the cells that can be scheduled by the DCI are not scheduled, the UE may multiplex the triggered aperiodic CSI report to the PUSCH on the actually scheduled cell with the lowest cell index.

**Modulation and coding scheme**

In NR, the modulation order and the coding rate of a PUSCH or a PDSCH scheduled by a DCI may be indicated via the modulation and coding scheme field in the DCI. To schedule multiple PDSCHs/PUSCHs on multiple cells, the modulation and coding scheme field may need to be extended or separate modulation and coding scheme fields may need to be defined for the multiple cells. In some implementations, some of the multiple cells that can be scheduled by DCI may be configured to be associated with the same modulation and coding scheme field. Sharing the same modulation and coding scheme field may save DCI overhead when the channel conditions are similar on the cells sharing a modulation and coding scheme field.

### Redundancy version

In NR, a PDSCH or PUSCH may carry a redundancy version (RV) of a TB. The RV may be indicated via the RV field in the scheduling DCI. When DCI schedules multiple PDSCHs/PUSCHs on multiple cells, the RV field may need to be extended or separate RV fields may need to be defined for the multiple cells.

### Antenna port

In NR, the DMRS port used for the corresponding PDSCH or PUSCH may be indicated via the antenna port field in the scheduling DCI. To enable multi-user multiple-input, multiple-output (MIMO), the antenna port field may need to be extended or separate RV fields may need to be defined for the multiple cells. In some implementations, the antenna port fields for some of the multiple cells may not need to be present. For example, for the cells with higher frequency, channel conditions may not be suitable for MIMO. In this case, a fixed or preconfigured antenna port may be used for the cells that are not configured with corresponding antenna ports.

### DMRS sequence initialization

In NR, the DMRS sequence for a PUSCH or PDSCH may be a pseudo random sequence which is initialized by a seed. The seed may be determined based on information provided by RRC configuration and DCI indication. To enable transmissions of multiple PDSCHs/PUSCHs on multiple cells, the DMRS sequence initialization field may need to be extended or DMRS sequence initialization fields may need to be defined for the multiple cells.

### Scell dormancy indication

In NR, a dormant BWP that does not include PDCCH may be configured, such that when the UE switches to a dormant BWP, there may be no power consumption resulting from PDCCH monitoring. When CA is configured, the Scells may be divided into groups, and an Scell dormancy indication field may be used to indicate whether the cells in the Scell groups should be switched to dormant BWPs. The Scell dormancy indication field may also be included in DCI scheduling multiple PDSCHs/PUSCHs on multiple cells. In some implementations, the field may be reserved if the FDRA field of one predefined or configured cell indicates an invalid value. In this case, the modulation and coding scheme field of transport block 1, new data indicator field of transport block 1, redundancy version field of transport block 1, HARQ process number field, antenna port(s) field, and DMRS sequence initialization field for the predefined or the configured cell may be used to indicate the Scell dormancy.

### Carrier Indicator

In NR, a carrier indicator field (CIF) may be carried by scheduling DCI. It also may not be clear how the gNB indicates carriers of the multiple scheduled PDSCHs/PUSCHs.

In some implementations, the number of bits of the CIF may be determined based on the number of scheduled cells. It may be noted that the number of scheduled cells may be determined based on some other indicator(s) carried by the scheduling DCI or carried by pre-configured RRC configuration.

### BWP Indicator

In NR, a Bandwidth part (BWP) indicator field may be carried by scheduled DCI. It may not be clear how the gNB indicates BWPs of the multiple scheduled PDSCHs/PUSCHs.

In some implementations, the BWP of the multiple scheduled PDSCHs/PUSCHs may refer to one of an initial BWP, an initial active BWP, a UL BWP configured with PUCCH, a DL BWP with same BWP index as a UL BWP configured with PUCCH, and a BWP with the smallest or largest BWP index.

In some implementations, the number of bits of the BWP indicator (ID) field may be determined based on the number of scheduled cells. It may be noted that the number of scheduled cells may be determined based on some other indicator(s) carried by the scheduling DCI or carried by pre-configured RRC configuration. For example, if the UE is configured with three cells (Cell 1, Cell 2, and Cell 3) and each cell is configured with four BWPs, there may be 6 bits (e.g., $b_1b_2b_3b_4b_5b_6$) for the BWP ID field while each cell may refer to 2 bits among the 6 bits. The association between indicated BWPs of scheduled cells and each bit of the bitstream of BWP ID field may be based on the cell IDs of each scheduled cell. For example, bits $b_1b_2$ may refer to the first scheduled cell, bits $b_3b_4$ may refer to the second scheduled cell, and bits $b_5b_6$ may refer to the third scheduled cell.

In some implementations, the BWP indicator field may only be applied for one or multiple dedicated cells among the multiple scheduled cells. The rest of scheduled cells may refer to one of an initial BWP, an initial active BWP, a UL BWP configured with PUCCH, a DL BWP with the same BWP index as a UL BWP configured with PUCCH, and a BWP with the smallest or largest BWP index.

In some implementations, the UE may be pre-configured with multiple sets of BWP IDs. Each of the sets may carry multiple BWP IDs. Each of the multiple IDs may refer to one of the scheduled cells. Which set is applied may be indicated by the gNB via DL MAC CE or DCI or DL RRC signaling. Among the multiple sets, a default set may be configured by the gNB via the DL RRC signaling. There may be a pre-defined set applied by the UE when no set is configured.

**TPC command for scheduled PUSCH**

In NR, the scheduling DCI of a PUSCH or a group common DCI (e.g., DCI format 2_2) may indicate to the UE to adjust the transmission power of the PUSCH. The scheduling DCI of a PUSCH may include a Transmit Power Control (TPC) command for a scheduled PUSCH field with 2 bits to indicate the transmission power adjustment for the PUSCH. To enable transmission of multiple PDSCHs/PUSCHs on multiple cells, the TPC command for scheduled PUSCH field may need to be extended or the TPC command for scheduled PUSCH fields may need to be defined for the multiple cells. To save signaling overhead, some cells that can be scheduled by the scheduling DCI may be configured with a corresponding TPC command for a scheduled PUSCH field with only 1 bit or may be configured with no corresponding TPC command for a scheduled PUSCH field.

For the case where TPC command accumulation is configured, when a cell is configured with a corresponding TPC command for a scheduled PUSCH field with only 1 bit, value 0 may be used to indicate no transmission power adjustment (e.g., accumulated $\delta_{PUSCH,b,f,c}$ as specified in the 3GPP TS 38.213 is equal to 0) for the PUSCH on the cell scheduled by the DCI, and value 1 may be used to indicate an amount of transmission power adjustment (e.g., accumulated $\delta_{PUSCH,b,f,c}$ is equal to X) for the PUSCH on the cell scheduled by the DCI. The amount of transmission power adjustment (X) may be predefined or configured by RRC. When a cell is not configured with a corresponding TPC command for a scheduled PUSCH field, no transmission power adjustment may be performed for the PUSCH on the cell scheduled by the DCI (e.g., accumulated $\delta_{PUSCH,b,f,c}$ is equal to 0).

For the case where TPC command accumulation is not configured, when a cell is configured with a corresponding TPC command for a scheduled PUSCH field with only 1 bit, value 0 may be used to indicate a first amount of transmission power adjustment (e.g., absolute $\delta_{PUSCH,b,f,c}$ is equal to X1) for the PUSCH on the cell scheduled by the DCI, and value 1 may be used to indicate a second amount of transmission power adjustment (e.g., absolute $\delta_{PUSCH,b,f,c}$ is equal to X2) for the PUSCH on the cell scheduled by the DCI. The first and second amount of transmission power adjustment (X1 and X2) may be predefined or configured by RRC. When a cell is not configured with a corresponding TPC command for a scheduled PUSCH field, a third amount of transmission power adjustment (X3) may be performed for the PUSCH on the cell scheduled by the DCI (e.g., absolute $\delta_{PUSCH,b,f,c}$ is equal to X3).

**Transmission configuration indication (TCI)**

In NR, the TCI state of PDSCH and PUSCH may be indicated by the scheduling DCI when a TCI field is included in the scheduling DCI. The determination of whether the TCI field is included in the scheduling DCI is based on the configuration of the CORESET in which the DCI is transmitted. To enable transmission of multiple PDSCHs/PUSCHs on multiple cells, the TCI field may need to be extended or the TCI fields may need to be defined for the multiple cells.

To configure which cell has corresponding TCI fields included in DCI scheduling multiple cells, a new RRC parameter may be included in the CORESET configuration. The number of TCI fields may be less than or equal to the number of cells that may be scheduled by the DCI.

Since the CORESET set may be associated with multiple search spaces, some search spaces may include DCI scheduling a single cell and some search spaces may include DCI scheduling multiple cells, and the new RRC parameter may be applied only for the DCI scheduling multiple cells.

In some implementations, the new RRC parameter may only configure TCI fields for the serving cells that are cross-carrier scheduled by the scheduling DCI. In other words, the TCI field corresponding to the scheduling cell may be determined based on the existing RRC parameter (e.g., tci-PresentInDCI).

In some implementations, the new RRC parameter may only indicate whether the existing RRC parameter (e.g., tci-PresentInDCI) applies for all cells. For example, when the new RRC parameter indicates true (or 1), all cells may have corresponding TCI fields if tci-PresentInDCI is configured. Otherwise, only the scheduling cell may have corresponding TCI fields if tci-PresentInDCI is configured.

**Configured Grant/Semi-Persistent Scheduling**

In NR, a configured grant (CG) and semi-persistent scheduling (SPS) may be preconfigured by DL RRC signaling. The configured CG and/or SPS may be (de)activated by the gNB via DCI with CRC bits scrambled by a particular type of RNTI (e.g., CS-RNTI).

In some implementations, multiple CGs and/or SPSs configured for multiple cells may be (de)activated by DCI which schedules the multiple cells.

In the following, time offset $K_0$ between PDCCH and PDSCH is described.

The time offset $K_0$ may be defined as the slot offset between the PDCCH detecting the DCI and the PDSCH. When the subcarrier spacings of PDSCH and PDCCH are different, the time offset between the PDCCH slot and the PDSCH slot may be $K_s = \lfloor n \cdot \frac{2^{\mu_{PDSCH}}}{2^{\mu_{PDCCH}}} \rfloor + K_0$ .

$K_0$ may be configured in PDSCH-TimeDomainResourceAllocation. When the field is absent, the UE may apply the value 0. One or more PDSCH-TimeDomainResourceAllocation may be configured in PDSCH-TimeDomainResourceAllocationList. A value in a TDRA field in a DCI format 1_0/1_1/1_2 may indicate one PDSCH-TimeDomainResourceAllocation in the PDSCH-TimeDomainResourceAllocationList, which includes $K_0$.

In the following, time offset k or $K_1$ between PDSCH and HARQ-ACK is described.

The time offset $K_1$ may be defined as the slot offset between the PDSCH and the corresponding HARQ-ACK in the PUCCH. For a DCI format, values in the PDSCH-to-HARQ_feedback timing indicator field, if present, may map to values for a set of number of slots provided by dl-DataToUL-ACK, dl-DataToUL-ACK-r16, or dl-DataToUL-ACKForDCIFormat1_2, as defined in Table 1. Table 1 below shows an example of mapping between values in the PDSCH-to-HARQ_feedback timing indicator field and values for a set of number of slots provided by dl-DataToUL-ACK, dl-DataToUL-ACK-r16, or dl-DataToUL-ACKForDCIFormat1_2.

**Table 1**

| PDSCH-to-HARQ_feedback timing indicator | | | Number of slots k (or $K_1$) |
|---|---|---|---|
| 1 bit | 2 bits | 3 bits | |
| '0' | '00' | '000' | first value provided by dl-DataToUL-ACK, dl-DataToUL-ACK-r16, dl-DataToUL-ACK-r17, or dl-DataToUL-ACKForDCIFormat1_2 |
| '1' | '01' | '001' | second value provided by dl-DataToUL-ACK, dl-DataToUL-ACK-r16, dl-DataToUL-ACK-r17, or dl-DataToUL-ACKForDCIFormat1_2 |
| | '10' | '010' | third value provided by dl-DataToUL-ACK, dl-DataToUL-ACK-r16, dl-DataToUL-ACK-r17, or dl-DataToUL-ACKForDCIFormat1_2 |
| | '11' | '011' | fourth value provided by dl-DataToUL-ACK, dl-DataToUL-ACK-r16, dl-DataToUL-ACK-r17, or dl-DataToUL-ACKForDCIFormat1_2 |
| | | '100' | fifth value provided by dl-DataToUL-ACK, dl-DataToUL-ACK-r16, dl-DataToUL-ACK-r17, or dl-DataToUL-ACKForDCIFormat1_2 |
| | | '101' | sixth value provided by dl-DataToUL-ACK, dl-DataToUL-ACK-r16, dl-DataToUL-ACK-r17, or dl-DataToUL-ACKForDCIFormat1_2 |
| | | '110' | seventh value provided by dl-DataToUL-ACK, dl-DataToUL-ACK-r16, dl-DataToUL-ACK-r17, or dl-DataToUL-ACKForDCIFormat1_2 |
| | | '111' | eighth value provided by dl-DataToUL-ACK, dl-DataToUL-ACK-r16, dl-DataToUL-ACK-r17, or dl-DataToUL-ACKForDCIFormat1_2 |

If the UE detects a DCI format that does not include a PDSCH-to-HARQ_feedback timing indicator field and schedules a PDSCH reception or activates an SPS PDSCH reception ending in DL slot $n_D$, the UE may provide corresponding HARQ-ACK information in a PUCCH transmission within UL slot n+k, where k is provided by dl-DataToUL-ACK, dl-DataToUL-ACK-r16, or dl-DataToUL-ACKForDCIFormat1_2.

If the UE detects a DCI format scheduling a PDSCH reception ending in DL slot $n_D$, the UE may provide corresponding HARQ-ACK information in a PUCCH transmission within UL slot n+k, where k is a number of slots and is indicated by the PDSCH-to-HARQ_feedback timing indicator field in the DCI format, if present, or provided by dl-DataToUL-ACK, dl-DataToUL-ACK-r16, or dl-DataToUL-ACKForDCIFormat1_2.

In some implementations, for an SPS PDSCH reception ending in DL slot n, the UE transmits the PUCCH in UL slot n+k, where k is provided by the PDSCH-to-HARQ_feedback timing indicator field in a DCI format activating the SPS PDSCH reception.

In the following, time offset $K_2$ between PDCCH and PUSCH is described.

The time offset $K_2$ may be defined as the slot offset between the PDCCH detecting the DCI and the PUSCH. When the subcarrier spacing of PUSCH and PDCCH is different, the time offset between PDCCH slot and PUSCH slot may

be $K_s = \lfloor n \cdot \frac{2^{\mu_{PUSCH}}}{2^{\mu_{PDCCH}}} \rfloor + K_2 \cdot$

The time offset $K_2$ may be configured in PUSCH-TimeDomainResourceAllocation. When the field is absent, the UE may apply the value 1 when PUSCH SCS is 15/30 kHz, apply the value 2 when PUSCH SCS is 60 kHz, and apply the value 3 when PUSCH SCS is 120 kHz. One or more PUSCH-TimeDomainResourceAllocation may be configured in PUSCH-TimeDomainResourceAllocationList. A value in a TDRA field in a DCI format 0_0/0_1/0_2 may indicate one PUSCH-TimeDomainResourceAllocation in the PUSCH-TimeDomainResourceAllocationList, which includes $K_2$.

In the following, the scheduling configuration or resource configuration for scheduling multiple PDSCHs scheduled by a single DCI is described. To support that a single DCI can schedule multiple PDSCHs, one or more following parameters may be configured/indicated:

(a) start and length indicator value (SLIV),
(b) start symbol S,
(c) the allocation length L,
(d) slot offset (e.g., $K_0$) between the PDCCH detecting the DCI and the PDSCH,
(e) slot offset (e.g., k or $K_1$) between the PDSCH and the HARQ-ACK timing,
(f) slot offset (e.g., $K_2$) between the PDCCH detecting the DCI and the PUSCH,
(g) mapping type (e.g., Type A or Type B),
(h) number of repetitions,
(i) HARQ-process ID,
(j) number of time-domain bundling group,
(k) serving cell (ID),
(l) BWP (ID),
(m) new data indicator (NDI),
(n) redundancy version (RV),
(o) common parameter list,
(p) offset between each PDSCH, and
(q) PDSCH configuration list.

Specifically, the scheduling configuration or resource configuration may be parameter(s) in at least one of TDRA, FDRA, PDSCH-config, and PUCCH-config (table) in RRC.

In the following, HARQ-ACKs corresponding to multiple PDSCHs scheduled by a single DCI is described. The value $K_1$ may be further considered by introducing a new RRC parameter (e.g., dl-DataToUL-ACK-xr) which is related to $K_1$, by enhancing an existing RRC parameter (e.g., dl-DataToUL-ACK) which is related to $K_1$, or by adding/introducing/-configuring $K_1$ into each row/entry of the TDRA table which is for scheduling multiple PDSCHs by a single DCI. In some implementations, the UE may not be indicated with different $K_1$ values for the PDSCHs belonging to the same HARQ-ACK time-domain bundling group by the DCI or by the configured TDRA table. In some implementations, the UE may not be configured to enable HARQ-ACK time-domain bundling operation. In some implementations, $K_1$ may be configured in a PUCCH resource and/or PUCCH resource set. In some implementations, $K_1$ may be indicated (directly) by a value in a DCI field in the DCI. The DCI field may include at least one of a TDRA field, a PDSCH-to-HARQ_feedback timing indicator field, a PUCCH resource indicator field, and a new DCI field.

In the following, a special scheme for scheduling multiple PDSCHs/PUSCHs by a single DCI is described. If the UE receives the DCI scheduling multiple PDSCHs/PUSCHs (or the DCI for UL/DL enhancement related to multiple PDSCHs/PUSCHs) and one or more specific durations/periods of DL/UL resource are configured (e.g., ULForMulti-PUSCH or DLForMulti-PDSCH), one or more specific (or invalid) symbols/slots (e.g., indicated by a first DCI field in the DCI) may divide/separate the specific durations/periods (e.g., indicated by a second DCI field in the DCI) of DL/UL resource into multiple PDSCHs/PUSCHs.

In some implementations, the UE may be configured with a scheduling configuration or resource configuration (e.g., pdsch-TimeDomainAllocationListForMultiPDSCH) with one or more rows including at least one of the following (a)-(m) for PDSCH on a DL BWP of a serving cell.

(a) multiple SLIVs,
(b) multiple start symbol S,
(c) multiple allocation length L,
(d) multiple $K_0$,

(e) multiple mapping type,
(f) multiple HARQ-process ID,
(g) multiple serving cell ID,
(h) multiple BWP IDs,
(i) multiple number of repetitions,
(j) multiple NDIs,
(k) multiple RVs,
(l) multiple offsets between each resource, and
(m) multiple PDSCH configurations as a list.

The UE may detect the DCI which includes at least one of a time domain resource assignment (TDRA) field, a field corresponding to the scheduling configuration, and the resource configuration in a PDCCH. The number of bits of the field may be determined based on the number of entries/rows of the scheduling configuration or resource configuration. When the UE is scheduled to receive multiple (or a plurality of) PDSCHs for multiple (or a plurality of) serving cells by a single DCI, the TDRA field value m of the DCI may provide a row index m+1 corresponding to an allocation table based on the scheduling configuration or the resource configuration. The row index may correspond to at least one of (a) SLIVs, (b) start symbol S, (c) allocation length L, (d) $K_0$, (e) mapping type, (f) HARQ-process ID, (g) serving cell ID, (h) number of repetitions, (i) multiple BWP (ID), (j) multiple NDIs, (k) multiple RVs, (l) multiple offsets between each PDSCH resource, and (m) a corresponding PDSCH configuration index for the multiple (or a plurality of) PDSCHs.

The scheduling configuration or the resource configuration may be related to multiple PDSCH scheduling by a single DCI (e.g., pdsch-TimeDomainAllocationListForMultiPDSCH). The number of scheduled PDSCHs may be signaled by the number of indicated SLIVs in the row of the configured grant (e.g., PDSCH-TimeDomainResourceAllocation or pdsch-TimeDomainAllocationListForMultiPDSCH) signaled in the DCI format. The number of scheduled PDSCHs may be determined based on at least one of the number of PDSCH configurations, the number of rows/indexes in the scheduling configuration, and the resource configuration. The number of scheduled PDSCHs may be configured in a particular configuration which is used to schedule multiple PDSCHs by a single DCI.

If pdsch-TimeDomainAllocationListForMultiPDSCH (in pdsch-Config) includes row indicating resource allocation for multiple PDSCHs, $K_0$ may indicate the slot where the UE transmits the first PDSCH of the multiple PDSCHs. Each PDSCH may have at least one of (a) separate SLIVs, (b) a start symbol S, (c) an allocation length L, (d) $K_0$, (e) a mapping type, (f) a HARQ-process ID, (g) a serving cell ID, (h) a number of repetitions, (i) multiple BWP (IDs), (j) multiple NDIs, (k) multiple RVs, (l) offsets between each resource, and (m) a corresponding PDSCH configuration index. The number of scheduled PDSCHs may be signaled by at least one of (a) the number of indicated (valid) SLIVs, (b) the start symbol S, and (c) the allocation length L, in the row of the configured grant (e.g., pdsch-TimeDomainAllocationListForMultiPDSCH) signaled in the DCI.

The DCI may be scrambled by at least one of an SI-RNTI, a P-RNTI, an RA-RNTI, a C-RNTI, an MCS-C-RNTI, an SP-CSI-RNTI, CS-RNTI(s), an SL-RNTI, a PS-RNTI, a V-RNTI, a MsgB- RNTI, an SFI-RNTI, an INT-RNTI, a TPC-PUCCH-RNTI, a TPC-SRS-RNTI, and an SL-CS-RNTI. The DCI may be scrambled by one or more new RNTIs (e.g., xr-RNTI, or MP-RNTI) related to multiple PDSCHs scheduled by the DCI or related to XR application. The DCI format of the DCI may include at least one of DCI format 0_0, DCI format 0_1, DCI format 0_2, DCI format 1_0, DCI format 1_1, DCI format 1_2, DCI format 2_0, DCI format 2_1, DCI format 2_2, DCI format 2_3, DCI format 2_4, DCI format 2_5, DCI format 2_6, DCI format 3_0, and DCI format 3_1.

The UE may monitor the DCI in a common search space (CSS) set or a UE-specific search space (USS) set. The UE may monitor the DCI in Type3-PDCCH CSS set or USS set. The DCI may be the DCI that activates the SPS PDSCH or the CG PUSCH. One or more fields in the DCI may be set to a specific value. One or more DCI fields may be added to the DCI.

The indicated SLIV (or the indicated start symbol S and allocation length L) for each PDSCH may cross a slot boundary if at least one of the following conditions (a)-(d) is met.

(a) when the SLIV is included in a new PDSCH-TimedomainResourceallocation (e.g., PDSCH-TimedomainResourceallocation-r18),
(b) when the UE is configured with a specific IE for supporting the XR multi-PDSCH feature,
(c) when the UE is performing a XR procedure, and
(d) when the received DCI includes a specific field corresponding to a PDSCH-TimedomainResourceallocation-r18.

S+L may be greater than 14 for normal cyclic prefix, regardless of the repetition mapping type. S+L may be greater than 12 for extended cyclic prefix, regardless of the repetition mapping type. The value of S+L may be 1-27 for normal cyclic prefix, regardless of the repetition mapping type. The value of S+L may be 1-23 for extended cyclic prefix, regardless of the repetition mapping type. The UE may transmit a TB in a PDSCH, which cross two (DL) slots, indicated by the SLIV.

More than one PDSCH of the multiple PDSCHs may be configured in the same (PDSCH) slot. The UE may be indicated by the DCI with more than one $K_0$ value corresponding to the more than one PDSCH of the multiple PDSCHs, which are in the same (PDSCH) slot. The UE may receive more than one PDSCH in the (same) slot. The (same) slot may be indicated by same or different $K_0$ of the same or different PDSCH(s) scheduled by the DCI. The UE may receive the DCI scheduling more than one PDSCH. A value in a DCI field may indicate $K_0$ values for each of the multiple PDSCHs. More than one PDSCH of the multiple PDSCHs may be indicated to the same slot by the same or different $K_0$ (s). The UE may transmit more than one PDSCH of the multiple PDSCHs in the same slot (which is indicated by the DCI).

The number of the more than one PDSCH may have a maximum value or a minimum value, and the maximum value or the minimum value may be determined based on the reported UE capability or the number of DL symbols within a slot. The number of the more than one PDSCH may have a maximum value and a minimum value, and the maximum value and the minimum value may be determined based on the reported UE capability or the number of DL symbols within a slot.

More than one PDSCH of the multiple PDSCHs may be configured in non-consecutive slots. In other words, more than one PDSCH of the multiple PDSCHs may be configured in noncontinuous (PDSCH) slots. The number of non-consecutive slots may be within at least one of a particular duration, a configured periodicity, and a configured value. There may be some conditions for configuring the multiple PDSCHs in non-consecutive slots. For example, the number of DL symbols is less than a particular value or the priority of at least one PDSCH from the multiple PDSCHs refers to a low priority. The number of DL symbols is less than a particular value and the priority of at least one PDSCH from the multiple PDSCHs refers to a low priority.

One or more slot offsets and/or symbol offsets may be configured. The slot offset(s) may be the number of (DL) slots between two PDSCHs of the multiple PDSCHs indicated by a single DCI. The symbol offset(s) may be the number of (DL) symbols between two PDSCHs of the multiple PDSCHs indicated by a single DCI. The slot offsets/symbol offsets between each PDSCH may be different. When the scheduling configuration or the resource configuration includes a row/entry indicating multiple PDSCHs scheduled by a single DCI, the one or more slot offsets and/or symbol offsets (configured in the scheduling configuration or resource configuration) indicate at least one of the number of slots and the number of symbols between two PDSCHs of the multiple PDSCHs.

The HARQ-process ID for the multiple PDSCHs may be configured in the scheduling configuration or resource configuration (e.g., pdsch-TimeDomainAllocationListForMultiPDSCH, PDSCH-TimeDomainResourceAllocationList, or HARQ-ACKPorcessListForMultiPDSCH). The HARQ-process ID for the multiple PDSCHs may be non-consecutive.

One or more PDSCH-Allocation IEs may be included in an entry of the PDSCH-TimeDomainResourceAllocation IE. Each of the one or more PDSCH-Allocation IEs may include a SLIV and a HARQ-process ID of a PDSCH resource of the multiple PDSCHs. The derivation of a HARQ-process ID of each PDSCH for the multiple PDSCHs may be based on a predefined equation. The predefined equation may be the same as the predefined equation used for deriving the HARQ process IDs of PDSCHs corresponding to a configured downlink assignment (e.g., an SPS configuration). When the UE receives/detects the DCI scheduling multiple PDSCHs, a field in the DCI (e.g., HARQ-ACK process number field or TDRA field) may indicate more than one HARQ-ACK process ID based on the one or more HARQ-process IDs configured in the scheduling configuration or the resource configuration. When the UE receives/detects the DCI scheduling multiple PDSCHs and the UE is configured with one or more HARQ-ACK lists and each HARQ-ACK list includes one or more HARQ-ACK IDs, a value in a field in the DCI (e.g., a HARQ-ACK process number field, a TDRA field, or a new DCI field) may indicate one of the configured HARQ-ACK lists.

Cross carrier scheduling for scheduling multiple PDSCHs by a single DCI may be supported. The DCI scheduling multiple PDSCHs may include a carrier indicator field indicating the scheduled carrier. When the UE receives/detects the DCI scheduling multiple PDSCHs, a field in the DCI (e.g., carrier indicator field) may indicate which serving cell should apply multiple PDSCHs scheduled by the DCI.

The serving cell (ID) for the multiple PDSCHs may be configured in the scheduling configuration or resource configuration (e.g., pdsch-TimeDomainAllocationListForMultiPDSCH or ServingCellListForMultiPDSCH). The DCI may indicate multiple PDSCHs scheduled by a single DCI in more than one serving cell. When the UE receives/detects the DCI scheduling multiple PDSCHs, a field in the DCI (e.g., a carrier indicator field, a TDRA field, or a new DCI field) may indicate more than one serving cell based on the one or more serving cells configured in the scheduling configuration or the resource configuration.

One or more BWPs (IDs) for the multiple PDSCHs may be configured in the scheduling configuration or resource configuration (e.g., pdsch-TimeDomainAllocationListForMultiPDSCH and/or BWPForMultiPDSCH). The DCI may indicate multiple PDSCHs scheduled by a single DCI in more than one BWP in one or more serving cells. When the UE receives/detects the DCI scheduling multiple PDSCHs, a field in the DCI (e.g., a BWP indicator field, a TDRA field, or a new DCI field) may indicate one or more BWPs in one or more serving cells based on the one or more BWPs (IDs) configured in the scheduling configuration or the resource configuration.

One or more NDIs for the multiple PDSCHs may be configured in the scheduling configuration or resource configuration (e.g., pdsch-TimeDomainAllocationListForMultiPDSCH or NDIForMultiPDSCH). The DCI may indicate individual NDI for each PDSCH of multiple PDSCHs scheduled by a single DCI. When the UE receives/detects the DCI scheduling multiple PDSCHs, a field in the DCI (e.g., an NDI indicator field, a TDRA field, or a new DCI field) may indicate one or more NDIs based on the one or more NDIs configured in the scheduling configuration or the resource configuration. Some of the multiple PDSCHs may be PDSCH new transmissions and some of the multiple PDSCHs may be PDSCH retransmissions. The PDSCH of the multiple PDSCHs with a toggled NDI field value may carry a new PDSCH transmission. The PDSCH of the multiple PDSCHs with a non-toggled NDI field value may carry a PDSCH retransmission. If the UE is not expected to receive retransmission (or new transmission), the NDI field may be 0 bit. The NDI fields in the DCI may be absent. The absent NDI field may save the DCI fields.

One or more redundancy versions (RVs) for the multiple PDSCHs may be configured in the scheduling configuration or resource configuration (e.g., pdsch-TimeDomainAllocationListForMultiPDSCH or rvForMultiPDSCH). The DCI may indicate an individual redundancy version for each PDSCH of multiple PDSCHs by a single DCI. When the UE receives/detects the DCI scheduling multiple PDSCHs, a field in the DCI (e.g., an RV indicator field, a TDRA field, or a new DCI field) may indicate one or more RVs based on the one or more RVs configured in the scheduling configuration or the resource configuration.

A common list may be used to indicate the common parameter among different resources. For example, the common list may include at least one of value of $K_0$, $K_1$, maximum MIMO layers, MCS table, PRB, and the number of repetitions. One or more PDSCHs may be configured in a BWP in the scheduling configuration or resource configuration (e.g., pdsch-TimeDomainAllocationListForMultiPDSCH). The DCI may indicate multiple PDSCHs configured in the BWP by a single DCI. When the UE receives/detects the DCI scheduling multiple PDSCHs (or not scheduling multiple PDSCHs), a value in a DCI field (e.g., a BWP indicator field) in the DCI may indicate a BWP (ID) and multiple PDSCHs in the BWP (ID).

In some implementations, the UE may be configured with a scheduling configuration or resource configuration (e.g., pdsch-TimeDomainAllocationListForMultiPDSCH) with one or more rows including at least one of the following (a)-(m) for PUSCH on a DL BWP of a serving cell.

(a) multiple SLIVs,
(b) multiple start symbol S,
(c) multiple allocation length L,
(d) multiple K0,
(e) multiple mapping type,
(f) multiple HARQ-process ID,
(g) multiple serving cell ID,
(h) multiple BWP IDs,
(i) multiple number of repetitions,
(j) multiple NDIs,
(k) multiple RVs,
(l) multiple offsets between each resource, and
(m) multiple PUSCH configurations as a list.

The UE may detect the DCI which includes at least one of a time domain resource assignment (TDRA) field, a field corresponding to the scheduling configuration, and the resource configuration in a PDCCH. The number of bits of the field may be determined based on the number of entries/rows of the scheduling configuration or resource configuration. When the UE is scheduled to receive multiple (or plurality of) PUSCHs for multiple (or plurality of) serving cells by a single DCI, the TDRA field value m of the DCI may provide a row index m+1 corresponding to an allocation table based on the scheduling configuration or the resource configuration. The row index may correspond to at least one of (a) SLIVs, (b) start symbol S, (c) allocation length L, (d) K0, (e) mapping type, (f) HARQ-process ID, (g) serving cell ID, (h) number of repetitions, (i) multiple BWP (ID), (j) multiple NDIs, (k) multiple RVs, (l) multiple offsets between each PUSCH resource, and (m) a corresponding PUSCH configuration index for the multiple (or plurality of) PUSCHs.

The scheduling configuration or the resource configuration may be related to multiple PUSCH scheduling by a single DCI (e.g., pusch-TimeDomainAllocationListForMultiPUSCH). The number of scheduled PUSCHs may be signaled by the number of indicated SLIVs in the row of the configured grant (e.g., PUSCH-TimeDomainResourceAllocation or pusch-TimeDomainAllocationListForMultiPUSCH) signaled in the DCI format. The number of scheduled PUSCHs may be determined based on at least one of the number of PUSCH configurations, the number of rows/indexes in the scheduling configuration, and the resource configuration. The number of scheduled PUSCHs may be configured in a particular configuration which is used to schedule multiple PUSCHs by a single DCI.

If pusch-TimeDomainAllocationListForMultiPUSCH (in pusch-Config) includes a row indicating resource allocation for multiple PUSCHs, $K_2$ may indicate the slot where UE transmits the first PUSCH of the multiple PUSCHs. Each PUSCH may have at least one of (a) separate SLIVs, (b) a start symbol S, (c) an allocation length L, (d) $K_2$, (e) a mapping

type, (f) a HARQ-process ID, (g) a serving cell ID, (h) a number of repetitions, (i) multiple BWP (IDs), (j) multiple NDIs, (k) multiple RVs, (l) offsets between each resource, and (m) a corresponding PUSCH configuration index. The number of scheduled PUSCHs may be signaled by at least one of (a) the number of indicated (valid) SLIVs, (b) the start symbol S, and (c) the allocation length L, in the row of the configured grant (e.g., pusch-TimeDomainAllocationListForMultiPUSCH) signaled in DCI.

The DCI may be scrambled by at least one of an SI-RNTI, a P-RNTI, an RA-RNTI, a C-RNTI, an MCS-C-RNTI, an SP-CSI-RNTI, CS-RNTI(s), an SL-RNTI, a PS-RNTI, a V-RNTI, a MsgB-RNTI, an SFI-RNTI, an INT-RNTI, a TPC-PUSCH-RNTI, a TPC-PUCCH-RNTI, a TPC-SRS-RNTI, and an SL-CS-RNTI. The DCI may be scrambled by one or more new RNTIs (e.g., xr-RNTI or MP-RNTI) related to multiple PUSCHs scheduled by the DCI or related to XR application. The DCI format of the DCI may be at least one of DCI format 0_0, DCI format 0_1, DCI format 0_2, DCI format 1_0, DCI format 1_1, DCI format 1_2, DCI format 2_0, DCI format 2_1, DCI format 2_2, DCI format 2_3, DCI format 2_4, DCI format 2_5, DCI format 2_6, DCI format 3_0, and DCI format 3_1.

The UE may monitor the DCI in a common search space (CSS) set or a UE-specific search space (USS) set. The UE may monitor the DCI in Type3-PDCCH CSS set or USS set. The DCI may be the DCI that activates the SPS PDSCH or the CG PUSCH. One or more fields in the DCI may be set to a specific value. One or more DCI fields may be added to the DCI.

The indicated SLIV (or the indicated start symbol S and allocation length L) for each PUSCH may cross a slot boundary if at least one of the following conditions (a)-(d) is met.

(a) when the SLIV is included in a new PUSCH-TimedomainResourceallocation (e.g., PUSCH-TimedomainResourceallocation-r18),
(b) when the UE is configured with a specific IE for supporting the XR multi-PUSCH feature,
(c) when the UE is performing an XR procedure, and
(d) when the received DCI includes a specific field corresponding to a PUSCH-TimedomainResourceallocation-r18.

S+L may be greater than 14 for normal cyclic prefix, regardless of the repetition mapping type. S+L may be greater than 12 for extended cyclic prefix, regardless of the repetition mapping type. The value of S+L may be 1-27 for normal cyclic prefix, regardless of the repetition mapping type. The value of S+L may be 1-23 for extended cyclic prefix, regardless of the repetition mapping type. The UE may transmit a TB in a PUSCH, which cross two (DL) slots, indicated by the SLIV.

More than one PUSCH of the multiple PDSCHs may be configured in the same (PUSCH) slot. The UE may be indicated by the DCI with more than one $K_2$ value corresponding to the more than one PUSCH of the multiple PUSCHs, which are in the same (PUSCH) slot.

The UE may receive more than one PUSCH in the (same) slot. The (same) slot may be indicated by the same or different $K_2$ of the same or different PUSCH(s) scheduled by the DCI.

The UE may receive the DCI scheduling more than one PDSCH. A value in a DCI field may indicate $K_2$ values for each of the multiple PUSCHs. More than one PDSCH of the multiple PUSCHs may be indicated to the same slot by the same or different $K_2$(s). The UE may transmit more than one PDSCH of the multiple PUSCHs in the same slot (which is indicated by the DCI).

The number of the more than one PUSCH may have a maximum value or a minimum value, and the maximum value or the minimum value may be determined based on the reported UE capability or the number of DL symbols within a slot. The number of the more than one PUSCH may have a maximum value and a minimum value, and the maximum value and the minimum value may be determined based on the reported UE capability or the number of DL symbols within a slot.

More than one PUSCH of the multiple PUSCHs may be configured in non-consecutive slots. In other words, more than one PUSCH of the multiple PUSCHs may be configured in noncontinuous (PUSCH) slots. The number of non-consecutive slots may be within at least one of a particular duration, a configured periodicity, and a configured value. There may be some conditions for configuring the multiple PUSCHs in non-consecutive slots. For example, the number of DL symbols is less than a particular value or the priority of at least one PUSCH from the multiple PUSCHs refers to a low priority. The number of DL symbols is less than a particular value and the priority of at least one PUSCH from the multiple PUSCHs refers to a low priority.

One or more slot offsets and/or symbol offsets may be configured. The slot offset(s) may be the number of (DL) slots between two PUSCHs of the multiple PUSCHs indicated by a single DCI. The symbol offset(s) may be the number of (DL) symbols between two PUSCHs of the multiple PUSCHs indicated by a single DCI. The slot offsets/symbol offsets between each PUSCH may be different. When the scheduling configuration or the resource configuration includes a row/entry indicating multiple PUSCHs scheduled by a single DCI, the one or more slot offsets and/or symbol offsets (configured in the scheduling configuration or resource configuration) indicate at least one of the number of slots and the number of symbols between two PUSCHs of the multiple PUSCHs.

The HARQ-process ID for the multiple PUSCHs may be configured in the scheduling configuration or resource configuration (e.g., pusch-TimeDomainAllocationListForMultiPUSCH, PUSCH-TimeDomainResourceAllocationList, or HARQ-ACKPorcessListForMultiPUSCH). The HARQ-process ID for the multiple PUSCHs may be non-consecutive.

One or more PUSCH-Allocation IEs may be included in an entry of the PUSCH-TimeDomainResourceAllocation IE. Each of the one or more PUSCH-Allocation IEs may include a SLIV and a HARQ-process ID of a PUSCH resource of the multiple PUSCHs. The derivation of a HARQ-process ID of each PUSCH for the multiple PUSCHs may be based on a predefined equation. The predefined equation may be the same as the predefined equation used for deriving the HARQ process IDs of PUSCHs corresponding to a configured downlink assignment (e.g., an SPS configuration). When the UE receives/detects the DCI scheduling multiple PUSCHs, a field in the DCI (e.g., HARQ-ACK process number field or TDRA field) may indicate more than one HARQ-ACK process ID based on the one or more HARQ-process IDs configured in the scheduling configuration or the resource configuration. When the UE receives/detects the DCI scheduling multiple PUSCHs, the UE is configured with one or more HARQ-ACK lists, and each HARQ-ACK list includes one or more HARQ-ACK IDs, a value in a field in the DCI (e.g., a HARQ-ACK process number field, a TDRA field, or a new DCI field) may indicate one of the configured HARQ-ACK lists.

Cross carrier scheduling for scheduling multiple PUSCHs by a single DCI may be supported. The DCI scheduling multiple PUSCHs may include a carrier indicator field indicating the scheduled carrier. When the UE receives/detects the DCI scheduling multiple PUSCHs, a field in the DCI (e.g., carrier indicator field) may indicate which serving cell should apply multiple PUSCHs scheduled by the DCI.

The serving cell (ID) for the multiple PUSCHs may be configured in the scheduling configuration or resource configuration (e.g., pdsch-TimeDomainAllocationListForMultiPDSCH or ServingCellListForMultiPDSCH). The DCI may indicate multiple PUSCHs scheduled by a single DCI in more than one serving cell. When the UE receives/detects the DCI scheduling multiple PUSCHs, a field in the DCI (e.g., a carrier indicator field, a TDRA field, or a new DCI field) may indicate more than one serving cell based on the one or more serving cells configured in the scheduling configuration or the resource configuration.

One or more BWPs (IDs) for the multiple PUSCHs may be configured in the scheduling configuration or resource configuration (e.g., pusch-TimeDomainAllocationListForMultiPUSCH and/or BWPForMultiPUSCH). The DCI may indicate multiple PDSCHs scheduled by a single DCI in more than one BW in one or more serving cells. When the UE receives/detects the DCI scheduling multiple PUSCHs, a field in the DCI (e.g., a BWP indicator field, a TDRA field, or a new DCI field) may indicate one or more BWPs in one or more serving cells based on the one or more BWPs (IDs) configured in the scheduling configuration or the resource configuration.

One or more NDIs for the multiple PUSCHs may be configured in the scheduling configuration or resource configuration (e.g., pusch-TimeDomainAllocationListForMultiPUSCH or NDIForMultiPUSCH). The DCI may indicate an individual NDI for each PUSCH of multiple PDSCHs scheduled by a single DCI. When the UE receives/detects the DCI scheduling multiple PUSCHs, a field in the DCI (e.g., an NDI indicator field, a TDRA field, or a new DCI field) may indicate one or more NDIs based on the one or more NDIs configured in the scheduling configuration or the resource configuration. Some of the multiple PUSCHs may be PUSCH new transmissions and some of the multiple PUSCHs may be PUSCH retransmissions. The PUSCH of the multiple PUSCHs with a toggled NDI field value may carry a new PUSCH transmission. The PUSCH of the multiple PUSCHs with a non-toggled NDI field value may carry a PUSCH retransmission. If the UE is not expected to receive retransmission (or new transmission), the NDI field may be a 0 bit. The NDI fields in the DCI may be absent. The absent NDI field may save the DCI fields.

One or more redundancy versions (RVs) for the multiple PUSCHs may be configured in the scheduling configuration or resource configuration (e.g., pusch-TimeDomainAllocationListForMultiPUSCH or rvForMultiPUSCH). The DCI may indicate an individual redundancy version for each PUSCH of multiple PUSCHs by a single DCI. When the UE receives/detects the DCI scheduling multiple PUSCHs, a field in the DCI (e.g., an RV indicator field, a TDRA field, or a new DCI field) may indicate one or more RVs based on the one or more RVs configured in the scheduling configuration or the resource configuration.

A common list may be used to indicate the common parameter among different resources. For example, the common list may include at least one value of $K_1$, $K_2$, maximum MIMO layers, MCS table, PRB, and the number of repetitions. One or more PUSCHs may be configured in a BWP in the scheduling configuration or resource configuration (e.g., pusch-TimeDomainAllocationListForMultiPUSCH). The DCI may indicate multiple PUSCHs configured in the BWP by a single DCI. When the UE receives/detects the DCI scheduling multiple PUSCHs (or not scheduling multiple PUSCHs), a value in a DCI field (e.g., a BWP indicator field) in the DCI may indicate a BWP (ID) and multiple PUSCHs in the BWP (ID).

In some implementations, the UE may be configured with a number of entries/rows in a RRC parameter related to PDSCH-to-HARQ_feedback timing (e.g., dl-DataToUL-ACK, dl-DataToUL-ACK-r16, dl-DataToUL-ACKForDCIFormat1_2, dl-DataToUL-ACK-xr, or dl-DataToUL-ACK). The DCI which schedules multiple PDSCHs in multiple serving cells may include a DCI field (e.g., at least one of a PDSCH-to-HARQ_feedback timing indicator field, a PUCCH resource indicator field, and a new DCI field) indicating $K_1$. $K_1$ may be the time offset between each PDSCH of the multiple PDSCHs in multiple serving cells and its PUCCH that includes a corresponding HARQ-ACK. The bit width for this field may be determined based on the number of entries/rows in the RRC parameter related to PDSCH-to-HARQ_feedback timing (e.g., dl-DataToUL-ACK, dl-DataToUL-ACK-r16, dl-DataToUL-ACKForDCIFormat1_2, or dl-DataToUL-ACK-xr).

In some implementations, for a DCI format, the values in the PDSCH-to-HARQ_feedback timing indicator field may map to the values for a set of number of slots provided by the RRC parameter related to PDSCH-to-HARQ_feedback timing (e.g., dl-DataToUL-ACK, dl-DataToUL-ACK-r16, dl-DataToUL-ACKForDCIFormat1_2, or dl-DataToUL-ACK-xr), and each value in the PDSCH-to-HARQ_feedback timing indicator field may respectively map to each value provided in the RRC parameter. In some implementations, the mapping between the values in the PDSCH-to-HARQ_feedback timing indicator field and the values for a set of number of slots provided by the RRC parameter related to PDSCH-to-HARQ_feedback timing (e.g., dl-DataToUL-ACK, dl-DataToUL-ACK-r16, dl-DataToUL-ACKForDCIFormat1_2, or dl-DataToUL-ACK-xr) may be as defined in Table 1 in the present disclosure.

In some implementations, if a PDSCH-to-HARQ_feedback timing indicator field is applied for multiple PDSCHs scheduled by a single DCI, a value the in PDSCH-to-HARQ_feedback timing indicator field may indicate a $K_1$ list in a RRC parameter. In some implementations, PDSCH-to-HARQ-feedback timing for the first PDSCH may refer to a reference value, and PDSCH-to-HARQ-feedback timing for the other PDSCHs may be configured as offsets relative to the reference value. Specifically, the offsets may be configured as a sequence.

In some implementations, if/when a UE detects a DCI format scheduling a number of PDSCH receptions (or multiple PDSCH receptions) and each PDSCH reception ends in DL slot $n_{D,i}$, where $i$ is the index of the number of PDSCH receptions (or the index of the multiple PDSCH receptions), the UE may provide corresponding HARQ-ACK information in a number of PUCCH transmissions (or multiple PUCCH transmissions) within UL slot $n_i + k1_i$ for each PDSCH reception in the number of PDSCH receptions (or for each PDSCH reception in the multiple PDSCH receptions), where $n_i$ is the last UL slot for each PUCCH transmission that overlaps with slot $n_{D,i}$ and $k1_i$ is the $i^{th}$ number of slots in a K1 row and is indicated by a DCI field (e.g., PDSCH-to-HARQ_feedback timing indicator field) in the DCI format, or provided by an RRC parameter related to a K1 list (e.g. dl-DataToUL-ACKList). Table 2 below shows an example of mapping between values in the PDSCH-to-HARQ_feedback timing indicator field and values for a set of number of slots provided by dl-DataToUL-ACKList. If the table (e.g., dl-DataToUL-ACKList) is not configured, the DCI field (e.g., PDSCH-to-HARQ_feedback timing indicator field) may indicate a row in a default table configured in RRC. In some implementations, if the table (e.g., dl-DataToUL-ACKList) is not configured, the DCI field (e.g., PDSCH-to-HARQ_feedback timing indicator field) may indicate a default K1 and/or a default PUCCH resource. In some implementations, the UE does not expect the table (e.g., dl-DataToUL-ACKList) is not configured if the UE receives the DCI scheduling multiple PDSCHs.

**Table 2**

| PDSCH-to-HARQ_feedback timing indicator | | | Number of slots k |
|---|---|---|---|
| 1 bit | 2 bits | 3 bits | |
| '0' | '00' | '000' | first row provided by dl-DataToUL-ACKList |
| '1' | '01' | '001' | second row provided by dl-DataToUL-ACKList |
| | '10' | '010' | third row provided by dl-DataToUL-ACKList |
| | '11' | '011' | fourth row provided by dl-DataToUL-ACKList |
| | | '100' | fifth row provided by dl-DataToUL-ACKList |
| | | '101' | sixth row provided by dl-DataToUL-ACKList |
| | | '110' | seventh row provided by dl-DataToUL-ACKList |
| | | '111' | eighth row provided by dl-DataToUL-ACKList |

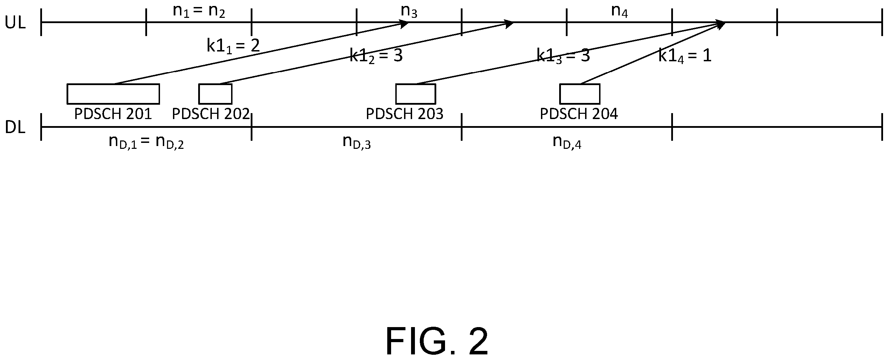

FIG. 2 is a timing diagram illustrating that dl-DataToUL-ACKList is applied to multiple PDSCHs scheduled by a single DCI, according to an example implementation of the present disclosure. If the first row provided by dl-DataToUL-ACKList is {2,3,3,1}, the first row {2,3,3,1} may be applied to 4 PDSCH receptions which are PDSCH 201, 202, 203 and 204 scheduled by a single DCI. If/when a UE detects a DCI format scheduling a number of PDSCH receptions (e.g., PDSCH 201, PDSCH 202, PDSCH 203, and PDSCH 204) and the PDSCH 201 ends in DL slot $n_{D,1}$, the PDSCH 202 ends in DL slot $n_{D,2}$, the PDSCH 203 ends in DL slot $n_{D,3}$ and the PDSCH 204 ends in DL slot $n_{D,4}$, the UE may provide corresponding HARQ-ACK information in a PUCCH transmission (or PUCCH transmission) within UL slot $n_1 + k1_1$ for the PDSCH 201, corresponding HARQ-ACK information in a PUCCH transmission (or PUCCH transmission) within UL slot $n_2 + k1_2$ for the PDSCH 202, corresponding HARQ-ACK information in a PUCCH transmission (or PUCCH transmission) within UL slot $n_3 + k1_3$ for the PDSCH 203, and corresponding HARQ-ACK information in a PUCCH transmission (or PUCCH transmission) within UL slot $n_4 + k1_4$ for the PDSCH 204. $n_1$ is the last UL slot for the PUCCH transmission that overlaps with DL slot $n_{D,1}$,

$n_2$ is the last UL slot for the PUCCH transmission that overlaps with DL slot $n_{D,2}$, $n_3$ is the last UL slot for the PUCCH transmission that overlaps with DL slot $n_{D,3}$, and $n_4$ is the last UL slot for the PUCCH transmission that overlaps with DL slot $n_{D,4}$. $k1_1$ is the first number of slots in a K1 row, $k1_2$ is the second number of slots in a K1 row, $k1_3$ is the third number of slots in a K1 row, $k1_4$ is the fourth number of slots in a K1 row. $k1_1$, $k1_2$, $k1_3$, and $k1_4$ may be indicated by a DCI field (e.g., PDSCH-to-HARQ_feedback timing indicator field) in the DCI format, or provided by a RRC parameter related to a K1 list (e.g., dl-DataToUL-ACKList).The number of K1 in the K1 row/entry indicated by the PDSCH-to-HARQ_feedback timing indicator field may be the same as the number of PDSCHs scheduled by the DCI. The number of K1 in the K1 row/entry indicated by the PDSCH-to-HARQ_feedback time indicator field may be the same as the number of PDSCH-Allocation IE in the PDSCH-TimeDomainResourceAllocation IE indicated by the DL assignment DCI. The UE does not expect to receive a DL assignment DCI which schedules a different number of PDSCHs from the number of K1 in the K1 row/entry indicated by a PDSCH-to-HARQ_feedback timing indicator field in the same DL assignment DCI. If the number of PDSCHs scheduled by a DL assignment DCI is less than the number of K1 in the K1 row/entry indicated by the PDSCH-to-HARQ_feedback timing indicator field in the same DL assignment DCI, the UE may apply a number of first K1 values in the K1 row/entry where the number is the same as the number of the scheduled PDSCHs. If the number of PDSCHs scheduled by a DL assignment DCI exceeds the number of K1 in the K1 row/entry indicated by the PDSCH-to-HARQ_feedback timing indicator field in the same DL assignment DCI, denoted by $N$, the UE may apply the $(n \bmod N)^{th}$ K1 in the K1 row/entry to the $n^{th}$ PDSCH.

A second PUCCH for ACK/NACK transmission associated with a second PDSCH does not occur before a first PUCCH for ACK/NACK transmission associated with a first PDSCH if the first PDSCH occurs before the second PDSCH. The first PDSCH and the second PDSCH may be scheduled by a same DL assignment DCI. The starting/ending symbol of the first PDSCH occurs before the starting/ending symbol of the second PDSCH.

The starting/ending symbol of the first PUCCH occurs before the starting/ending symbol of the second PUCCH. If a UE is provided with subslotLengthForPUCCH, a slot for an associated PUCCH resource of a PUCCH transmission with HARQ-ACK information may include a number of symbols indicated by subslotLengthForPUCCH. The UE may use a subslot length provided by subslotLengthForPUCCH to determine K1 in the K1 row/entry indicated by the PDSCH-to-HARQ_feedback timing indicator field. K1 may be in different units. For example, a first K1 associated with a first PDSCH may be configured in the unit of slot, a second K1 associated with a second PDSCH may be configured in the unit of sub-slot, and a third K1 associated with a third PDSCH may be configured in the unit of symbol.

If the UE detects a DCI format scheduling multiple PDSCH receptions, and the first/last PDSCH reception of the multiple PDSCH receptions ends in DL slot n, the UE may provide the HARQ-ACK information corresponding to the earliest PDSCH reception in a PUCCH transmission within UL slot n+k, where k is a number of slots and is indicated by the PDSCH-to-HARQ_feedback timing indicator field in the DCI format, if present, or provided by dl-DataToUL-ACK, dl-DataToUL-ACK-r16, or dl-DataToUL-ACKForDCIFormat1_2. The UE may provide the HARQ-ACK information corresponding to the other PDSCHs that occur later than the earliest PDSCH reception in PUCCH transmissions in continuous (PUCCH) slot. In some implementations, when a UE detects a DCI format scheduling three PDSCH receptions, and the first/last PDSCH reception of the multiple PDSCH receptions ends in DL slot n, the UE may provide the HARQ-ACK information corresponding to the earliest, second earliest, and last PDSCH receptions in the PUCCH transmissions within UL slot n+k, n+k+1, and n+k+2, respectively, where k is a number of slots and is indicated by the PDSCH-to-HARQ_feedback timing indicator field in the DCI format, if present, or provided by dl-DataToUL-ACK, dl-DataToUL-ACK-r16, or dl-DataToUL-ACKForDCIFormat1_2.

If the UE detects a DCI format scheduling multiple PDSCH receptions and one or more PUCCH resource (sets) are configured (e.g., PUCCHForMultiPDSCH), the UE may transmit multiple HARQ-ACKs corresponding to the multiple PDSCH receptions in one or more PUCCH resources which are indicated by a value in a DCI field in the DCI format (e.g., at least one of a TDRA field, a PDSCH-to-HARQ_feedback timing indicator field, a PUCCH resource indicator field, and a new DCI field). A value in the DCI field may indicate a row/entry of PUCCH resources which include more than one PUCCH resource configuration. K1 may be included in the PUCCH resource configuration. In other words, K1 may be configured in PUCCH-Resource.

In some implementations, K1 may be indicated (directly) by a value in a DCI field in the DCI. The DCI field may include at least one of a TDRA field, a PDSCH-to-HARQ_feedback timing indicator field, a PUCCH resource indicator field, and a new DCI field.

In some implementations, the UE may transmit HARQ-ACKs in one or more PUCCHs for multiple PDSCHs scheduled by a single DCI, and a slot offset between the PDSCH and the HARQ-ACK timing (e.g., K1) may be configured in a TDRA table (or pdsch-TimeDomainAllocationListForMultiPDSCH, or PDSCH-TimeDomainResourceAllocationList, or pdsch-TimeDomainAllocationListForMultiPDSCH-xr). K1 may be configured in the TDRA table (or PDSCH-TimeDomainResourceAllocationList, or pdsch-TimeDomainAllocationListForMultiPDSCH, or pdsch-TimeDomainAllocationListForMultiPDSCH-xr). In other words, the DCI may indicate a different K1 for each PDSCH. Each row/entry (e.g., PDSCH-TimeDomainResourceAllocation, or PDSCH-TimeDomainResourceAllocationXR) in the TDRA table may include one or more K1(s). One or more PUCCHs related to HARQ-ACKs for the multiple PDSCHs may be configured in the TDRA table (or PDSCH-TimeDomainResourceAllocationList). More than one PDSCH of the same priority index may share the same K1 value. K1 for more than one PDSCH scheduled by the same DCI may indicate to the same HARQ-ACK codebook. For example, the PUCCHs in response to each PDSCH may correspond to the same slot through the indicated K1.

If a UE receives DCI scheduling multiple PUSCHs (or if a UE receives DCI for UL/DL enhancement related to multiple PUSCHs) and one or more specific durations/periods of DL/UL resource are configured (e.g., ULForMulti-PUSCH), one or more specific (or invalid) symbols/slots (indicated by a first DCI field in the DCI) may divide/separate the specific durations/periods (indicated by a second DCI field in the DCI) of DL/UL resource into more than one PUSCH.

The specific duration/period of DL/UL resource may be a plurality of slots/symbols. The second DCI field may be a TDRA field or a new DCI field. The first DCI field may be an invalid symbol pattern indicator field or a new DCI field. If a UE receives DCI scheduling multiple PUSCHs (or if a UE receives DCI for UL/DL enhancement related to multiple PUSCHs/PDSCHs) and one or more specific durations/periods of a DL/UL resource are configured (e.g., ULForMulti-PUSCH), a slot boundary may divide/separate the specific durations/periods (indicated by a second DCI field in the DCI) of a DL/UL resource into more than one PUSCH.

The one or more specific (or invalid) symbols/slots may be at least one of the following (a)-(d).

(a) configured in the RRC,
(b) a symbol that is indicated as uplink/flexible by tdd-UL-DL-ConfigurationCommon or tdd-UL-DL-Configuration-Dedicated,
(c) symbols indicated by ssb-PositionsInBurst in SIB1 or ssb-PositionsInBurst in ServingCellConfigCommon for reception of SS/PBCH blocks (for operation in unpaired spectrum), and
(d) symbol(s) indicated by pdcch-ConfigSIB 1 in MIB for a CORESET for Type0-PDCCH CSS set that are considered as invalid symbol(s) (for operation in unpaired spectrum), and/or

If numberOfInvalidSymbolsForDL-UL-Switching is configured, numberOfInvalidSymbolsForDL-UL-Switching symbol(s) after the last symbol that is indicated as downlink in each consecutive set of all symbols that are indicated as downlink by tdd-UL-DL-ConfigurationCommon or tdd-UL-DL-ConfigurationDedicated are considered as invalid symbol(s).

The UE may be configured invalid symbols with the higher layer parameter invalidSymbolPattern (which provides a symbol level bitmap spanning one or two slots higher layer parameter symbols given by invalidSymbolPattern).

If a UE receives DCI scheduling multiple PDSCHs (or if a UE receives DCI for UL/DL enhancement related to multiple PDSCHs) and one or more specific durations/periods of DL/UL resource are configured (e.g., DLForMulti-PDSCH), one or more specific (or invalid) symbols/slots (indicated by a first DCI field in the DCI) may divide/separate the specific durations/periods (indicated by a second DCI field in the DCI) of a DL/UL resource into more than one PDSCH.

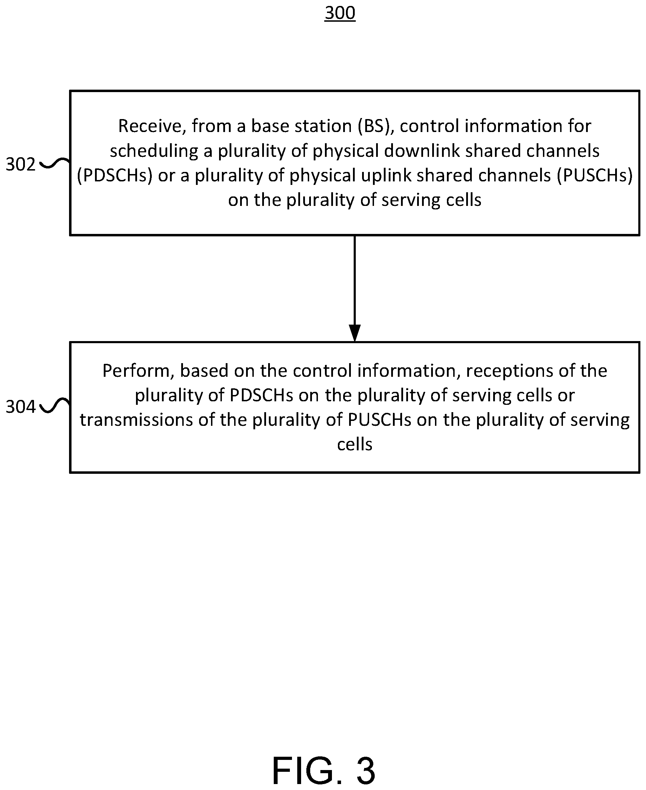

FIG. 3 is a flowchart illustrating a method 300 performed by a UE for performing a plurality of receptions or transmissions on a plurality of serving cells, according to an example implementation of the present disclosure. Although actions 302 and 304 are illustrated as separate actions represented as independent blocks in FIG. 3, these separately illustrated actions should not be construed as necessarily order-dependent. The order in which the actions are performed in FIG. 3 is not intended to be construed as a limitation, and any number of the disclosed blocks may be combined in any order to implement the method, or an alternate method. Moreover, each of actions 302 and 304 may be performed independently of other actions and can be omitted in some implementations of the present disclosure.

In action 302, the UE receives, from a BS, control information for scheduling a plurality of physical downlink shared channels (PDSCHs) or a plurality of physical uplink shared channels (PUSCHs) on the plurality of serving cells. Each of the plurality of receptions or transmissions may correspond to each of the plurality of serving cells, respectively. The control information includes a plurality of fields, and the plurality of fields includes at least one of a hybrid automatic repeat request (HARQ) process number field, a PDSCH-to-HARQ timing indicator field, and a time domain resource allocation (TDRA) field. The TDRA field is used to allocate time domain resources for all of the plurality of PDSCHs or all of the plurality of PUSCHs.

In some implementations, a value in the TDRA field may correspond to a row index in a TDRA table, the row index may include a plurality of start and length indicator values (SLIVs) for the plurality of PDSCHs or the plurality of PUSCHs, and each of the plurality of SLIVs may correspond to each of the plurality of PDSCHs or the plurality of PUSCHs respectively.

In some implementations, the UE may transmit, after receiving the plurality of PDSCHs, a plurality of hybrid automatic repeat request-acknowledgements (HARQ-ACKs) corresponding to the plurality of PDSCHs in a slot on one of the plurality of serving cells based on the PDSCH-to-HARQ timing indicator field.

The UE determines, based on the HARQ process number field, a plurality of HARQ process IDs corresponding to the plurality of PDSCHs or the plurality of PUSCHs.

The UE determines a number of bits of the HARQ process number field based on a number of the plurality of serving cells and a number of the plurality of HARQ process IDs of a plurality of HARQ processes configured for each of the plurality of serving cells. In some implementations, the UE may determine the number of the bits of the HARQ process number field by multiplying the number of the plurality of serving cells and $\log_2(N)$, wherein N is the number of the plurality of HARQ process IDs of the plurality of HARQ processes configured for each of the plurality of serving cells. For example, if 16 HARQ processes (e.g., each HARQ process has a HARQ process ID) are configured for each of 3 serving cells, the UE may determine that the number of bits of the HARQ process number field is 12 which is calculated by multiplying the number of the serving cells (e.g., 3) and $\log_2$(the number of the plurality of HARQ process IDs of the plurality of HARQ processes configured for each of the plurality of serving cells) (e.g., 4).

In some implementations, each of the plurality of HARQ process IDs may respectively correspond to each of the plurality of PDSCHs or each of the plurality of PUSCHs, the plurality of the HARQ process IDs may be determined based on a plurality of groups of $\log_2(N)$ bits in the HARQ process number field, and N is the number of the plurality of HARQ process IDs of the plurality of HARQ processes configured for each of the plurality of serving cells. For example, if 16 HARQ processes (e.g., each HARQ process has a HARQ process ID) are configured for each of the plurality of serving cells, the plurality of HARQ process IDs may be determined based on a plurality of groups of 4 bits in the HARQ process number field.

In some implementations, a first HARQ process ID of the plurality of HARQ process IDs for a first PDSCH of the plurality of PDSCHs or a first PUSCH of the plurality of PUSCHs may be determined based on a first group of the plurality of groups of $\log_2(N)$ bits in the HARQ process number field, a second HARQ process ID of the plurality of HARQ process IDs for a second PDSCH of the plurality of PDSCHs or a second PUSCH of the plurality of PUSCHs may be determined based on a second group of the plurality of groups of $\log_2(N)$ bits in the HARQ process number field, and a third HARQ process ID of the plurality of HARQ process IDs for a third PDSCH of the plurality of PDSCHs or a third PUSCH of the plurality of PUSCHs may be determined based on a third group of the plurality of groups of $\log_2(N)$ bits in the HARQ process number field. For example, if 16 HARQ processes (e.g., each HARQ process has a HARQ process ID) are configured for each of 3 serving cells and the HARQ process number field is determined to include 12 bits (e.g., $b_1b_2b_3b_4b_5b_6b_7b_8b_9b_{10}b_{11}b_{12}$) which is calculated by multiplying the number of the plurality of serving cells (e.g., 3) and $\log_2$(the number of the plurality of HARQ process IDs of the plurality of HARQ processes configured for each of the plurality of serving cells) (e.g., 4), the first HARQ process ID may be determined based on first group of 4 bits (e.g., $b_1b_2b_3b_4$) in the HARQ process number field, the second HARQ process ID may be determined based on second group of 4 bits (e.g., $b_5b_6b_7b_8$) in the HARQ process number field, and the third HARQ process ID may be determined based on third group of 4 bits (e.g., $b_9b_{10}b_{11}b_{12}$) in the HARQ process number field.

In some implementations, the plurality of HARQ process IDs may be determined by grouping consecutive $\log_2(N)$ bits, which starts with the Most Significant Bit (MSB) or the Least Significant Bit (LSB) of the HARQ process number field. For example, if the HARQ process number field is determined to include 12 bits (e.g., $b_1b_2b_3b_4b_5b_6b_7b_8b_9b_{10}b_{11}b_{12}$), the plurality of the HARQ process IDs may be determined by grouping consecutive 4 bits, which starts with the Most Significant Bit (MSB) (e.g., $b_1$) or the Least Significant Bit (LSB) (e.g., $b_{12}$) of the HARQ process number field. The groups of consecutive 4 bits may be bits $b_1b_2b_3b_4$, bits $b_5b_6b_7b_8$, and bits $b_9b_{10}b_{11}b_{12}$.

In action 304, the UE performs, based on the control information, receptions of the plurality of PDSCHs on the plurality of serving cells or transmissions of the plurality of PUSCHs on the plurality of serving cells.

In the present disclosure, the UE receives control information for scheduling a plurality of physical downlink shared channels (PDSCHs) or a plurality of physical uplink shared channels (PUSCHs) on the plurality of serving cells, it may reduce signaling overhead. The UE may not need to monitor a plurality of DCI for a plurality of PDSCHs or a plurality of PUSCHs on the plurality of serving cells, so that signaling overhead may be reduced.

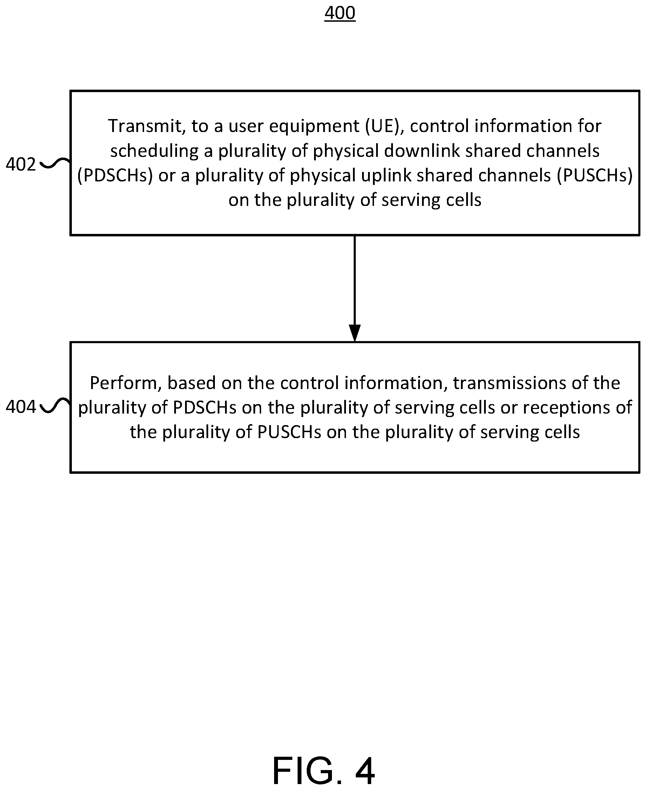

FIG. 4 is a flowchart illustrating a method 400 performed by a BS for performing a plurality of receptions or transmissions on a plurality of serving cells, according to an example implementation of the present disclosure. Although actions 402 and 404 are illustrated as separate actions represented as independent blocks in FIG. 4, these separately illustrated actions should not be construed as necessarily order-dependent. The order in which the actions are performed in FIG. 4 is not intended to be construed as a limitation, and any number of the disclosed blocks may be combined in any order to implement the method, or an alternate method. Moreover, each of actions 402 and 404 may be performed independently of other actions and can be omitted in some implementations of the present disclosure.

In action 402, the BS transmits, to a UE, control information for scheduling a plurality of physical downlink shared channels (PDSCHs) or a plurality of physical uplink shared channels (PUSCHs) on the plurality of serving cells. Each of the plurality of receptions or transmissions may correspond to each of the plurality of serving cells, respectively. The control information includes a plurality of fields, and the plurality of fields includes at least one of a hybrid automatic repeat request (HARQ) process number field, a PDSCH-to-HARQ timing indicator field, and a time domain resource allocation (TDRA) field. The TDRA field is used to allocate time domain resources for all of the plurality of PDSCHs or all of the plurality of PUSCHs.

In action 404, the BS performs, based on the control information, transmissions of the plurality of PDSCHs on the plurality of serving cells or receptions of the plurality of PUSCHs on the plurality of serving cells.

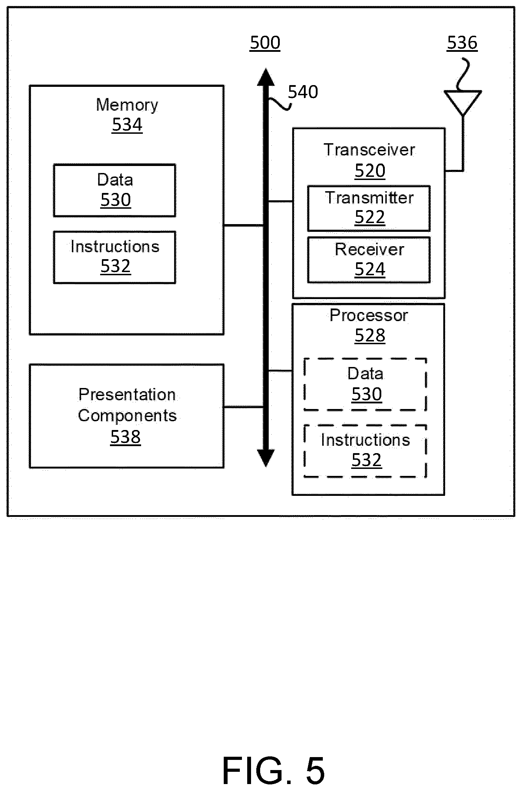

FIG. 5 is a block diagram illustrating a node 500 for wireless communication, according to an example implementation of the present disclosure. As illustrated in FIG. 5, a node 500 may include a transceiver 520, a processor 528, a memory 534, one or more presentation components 538, and at least one antenna 536. The node 500 may also include a radio frequency (RF) spectrum band module, a BS communications module, a network communications module, and a system communications management module, Input / Output (I/O) ports, I/O components, and a power supply (not illustrated in FIG. 5).

Each of the components may directly or indirectly communicate with each other over one or more buses 540. The node 500 may be a UE or a BS that performs various functions disclosed with reference to FIGS. 3 and 4.

The transceiver 520 has a transmitter 522 (e.g., transmitting/transmission circuitry) and a receiver 524 (e.g., receiving/reception circuitry) and may be configured to transmit and/or receive time and/or frequency resource partitioning information. The transceiver 520 may be configured to transmit in different types of subframes and slots including, but not limited to, usable, non-usable, and flexibly usable subframes and slot formats. The transceiver 520 may be configured to receive data and control channels.

The node 500 may include a variety of computer-readable media. Computer-readable media may be any available media that may be accessed by the node 500 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information, such as computer-readable instructions, data structures, program modules, or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave, or other transport mechanisms and include any information delivery media.

The term "modulated data signal" may mean a signal that has one or more of its characteristics set or changed in such a manner as to encode information in the signal. Communication media may include wired media such as a wired network or direct-wired connection, and wireless media such as acoustic, RF, infrared, and other wireless media. Combinations of any of the previously listed components should also be included within the scope of computer-readable media.

The memory 534 may include computer-storage media in the form of volatile and/or nonvolatile memory. The memory 534 may be removable, non-removable, or a combination thereof. Example memory may include solid-state memory, hard drives, optical-disc drives, etc. As illustrated in FIG. 5, the memory 534 may store a computer-readable and/or computer-executable program 532 (e.g., software codes) that are configured to, when executed, cause the processor 528 to perform various functions disclosed herein, for example, with reference to FIGS. 3 and 4. Alternatively, the program 532 may not be directly executable by the processor 528 but may be configured to cause the node 500 (e.g., when compiled and executed) to perform various functions disclosed herein.

The processor 528 (e.g., having processing circuitry) may include an intelligent hardware device (e.g., a Central Processing Unit (CPU), a microcontroller, an ASIC, etc.). The processor 528 may include memory. The processor 528 may process the data 530 and the program 532 received from the memory 534, and information transmitted and received via the transceiver 520, the baseband communications module, and/or the network communications module. The processor 528 may also process information to send to the transceiver 520 for transmission via the antenna 536 to the network communications module for transmission to a CN.

One or more presentation components 538 may present data indications to a person or another device. Examples of presentation components 538 may include a display device, a speaker, a printing component, a vibrating component, etc.

In view of the present disclosure, it is obvious that various techniques may be used for implementing the disclosed concepts. Moreover, while the concepts have been disclosed with specific reference to certain implementations, a person of ordinary skill in the art may recognize that changes may be made in form and detail. As such, the disclosed implementations are to be considered in all respects as illustrative and not restrictive. It should also be understood that the present disclosure is not limited to the particular implementations disclosed and many rearrangements, modifications, and substitutions are possible. The scope of the invention is defined by the appended claims.

**Claims**

1. A method performed by a user equipment, UE (500), for performing a plurality of receptions or transmissions on a plurality of serving cells, the method comprising:

(302) receiving control information for scheduling a plurality of physical downlink shared channels, PDSCHs, or a plurality of physical uplink shared channels, PUSCHs, on the plurality of serving cells;

(304) performing, based on the control information, receptions of the plurality of PDSCHs on the plurality of serving cells or transmissions of the plurality of PUSCHs on the plurality of serving cells, the control information comprising a plurality of fields, the plurality of fields comprising at least one of a hybrid automatic repeat request, HARQ, process number field, a PDSCH-to-HARQ timing indicator field and a time domain resource allocation, TDRA, field, and the TDRA field being used to allocate time domain resources for all of the plurality of PDSCHs or all of the plurality of PUSCHs;

determining, based on the HARQ process number field, a plurality of HARQ process IDs corresponding to the plurality of PDSCHs or the plurality of PUSCHs;

determining a number of bits of the HARQ process number field based on a number of the plurality of serving cells and a number of the plurality of HARQ process IDs; the method **characterised by**

determining the number of the bits of the HARQ process number field by a total number of HARQ process IDs for each serving cell, wherein:

the total number of the HARQ process IDs for each serving cell is provided via downlink radio resource control, RRC, signaling transmitted by a base station, and
the total number of the HARQ process IDs for each serving cell is different.

2. The method of claim 1, wherein:

a value in the TDRA field corresponds to a row index in a TDRA table,
the row index includes a plurality of start and length indicator values, SLIVs, for the plurality of PDSCHs or the plurality of PUSCHs, and
each of the plurality of SLIVs corresponds to each of the plurality of PDSCHs or the plurality of PUSCHs respectively.

3. The method of claim 1 or 2, further comprising:
transmitting, after receiving the plurality of PDSCHs, a plurality of hybrid automatic repeat request-acknowledgements, HARQ-ACKs, corresponding to the plurality of PDSCHs in a slot on one of the plurality of serving cells based on the PDSCH-to-HARQ timing indicator field.

4. The method of claim 1, wherein:

each of the plurality HARQ process IDs respectively corresponds to each of the plurality of PDSCHs or each of the plurality of PUSCHs,
the plurality of the HARQ process IDs are determined based on a plurality of groups of $\log_2(Ni)$ bits in the HARQ process number field, and
Ni is the number of the HARQ process IDs for serving cell i.

5. The method of claim 4, wherein:

a first HARQ process ID of the plurality HARQ process IDs for a first PDSCH of the plurality of PDSCHs or a first PUSCH of the plurality of PUSCHs is determined based on first group of $\log_2(N)$ bits in the HARQ process number field,
a second HARQ process ID of the plurality HARQ process IDs for a second PDSCH of the plurality of PDSCHs or a second PUSCH of the plurality of PUSCHs is determined based on second group of $\log_2(N)$ bits in the HARQ process number field, and
a third HARQ process ID of the plurality HARQ process IDs for a third PDSCH of the plurality of PDSCHs or a third PUSCH of the plurality of PUSCHs is determined based on third group of $\log_2(N)$ bits in the HARQ process number field.

6. The method of claim 1, wherein:
the plurality of the HARQ process IDs are determined by grouping consecutive $\log_2(Ni)$ bits, which starts with the Most Significant Bit, MSB, or the Least Significant Bit, LSB, of the HARQ process number field.

7. A user equipment, UE (500) for performing a plurality of receptions or transmissions on a plurality of serving cells, the UE comprising:

one or more non-transitory computer-readable media (534) having computer-executable instructions (532) embodied thereon; and

at least one processor (528) coupled to the one or more non-transitory computer-readable media, wherein the computer-executable instructions, when executed by the at least one processor, cause the UE to perform the method of any of claims 1 to 6.

8. A base station, BS (500), for performing a plurality of receptions or transmissions on a plurality of serving cells, the BS comprising:

one or more non-transitory computer-readable media (534) having computer-executable instructions (532) embodied thereon; and

at least one processor (528) coupled to the one or more non-transitory computer-readable media, the at least one processor being configured to execute the computer-executable instructions to:

(402) transmit control information for scheduling a plurality of physical downlink shared channels, PDSCHs, or a plurality of physical uplink shared channels, PUSCHs, on the plurality of serving cells,

(404) perform, based on the control information, transmissions of the plurality of PDSCHs on the plurality of serving cells or receptions of the plurality of PUSCHs on the plurality of serving cells, the control information comprising a plurality of fields, the plurality of fields comprising at least one of a hybrid automatic repeat request, HARQ, process number field, a PDSCH-to-HARQ timing indicator field and a time domain resource allocation, TDRA, field, and the TDRA field being used to allocate time domain resources for all of the plurality of PDSCHs or all of the plurality of PUSCHs;

determine, based on the HARQ process number field, a plurality of HARQ process IDs corresponding to the plurality of PDSCHs or the plurality of PUSCHs;

determine a number of bits of the HARQ process number field based on a number of the plurality of serving cells and a number of the plurality of HARQ process IDs; **characterised by**

determining the number of the bits of the HARQ process number field by a total number of HARQ process IDs for each serving cell, wherein:

the total number of the HARQ process IDs for each serving cell is provided via downlink radio resource control, RRC, signaling transmitted by a base station, and

the total number of the HARQ process IDs for each serving cell is different.

**Patentansprüche**

1. Verfahren, das von einem Benutzergerät (UE) (500) ausgeführt wird, zum Durchführen einer Mehrzahl von Empfangs- oder Sendevorgängen auf einer Mehrzahl von bedienenden Zellen bzw. Dienstzellen, wobei das Verfahren umfasst:

(302) Empfangen von Steuer- bzw. Regelinformationen zum Terminieren bzw. Planen einer Mehrzahl von Physical Downlink Shared Channels, PDSCHs, oder einer Mehrzahl von Physical Uplink Shared Channels, PUSCHs, auf der Mehrzahl von bedienenden Zellen;

(304) Durchführen, basierend auf den Steuer- bzw. Regelinformationen, von Empfangsvorgängen der Mehrzahl von PDSCHs auf der Mehrzahl von bedienenden Zellen oder von Sendevorgängen der Mehrzahl von PUSCHs auf der Mehrzahl von bedienenden Zellen, wobei die Steuer- bzw. Regelinformationen eine Mehrzahl von Feldern umfassen, wobei die Mehrzahl von Feldern zumindest eines von Hybrid Automatic Repeat Request, HARQ,-Prozessnummernfeld, PDSCH-zu-HARQ-Timing-Indikatorfeld und Time Domain Resource Allocation, TDRA,-Feld umfasst, und das TDRA-Feld zum Zuweisen von Time-Domain-Ressourcen für alle der Mehrzahl von PDSCHs oder alle der Mehrzahl von PUSCHs verwendet wird;

Bestimmen, basierend auf dem HARQ-Prozessnummernfeld, einer Mehrzahl von HARQ-Prozess-IDs, die der Mehrzahl von PDSCHs oder PUSCHs entsprechen;

Bestimmen einer Anzahl von Bits des HARQ-Prozessnummernfelds basierend auf einer Anzahl der Mehrzahl von bedienenden Zellen und einer Anzahl der Mehrzahl von HARQ-Prozess-IDs;

wobei das Verfahren **gekennzeichnet ist durch**

Bestimmen der Anzahl der Bits des HARQ-Prozessnummernfelds durch eine Gesamtzahl von HARQ-Prozess-IDs für jede bedienende Zelle, wobei:

die Gesamtzahl der HARQ-Prozess-IDs für jede bedienende Zelle über eine Downlink Radio Resource Control, RRC,-Signalisierung bereitgestellt wird, die von einer Basisstation gesendet wird, und

die Gesamtzahl der HARQ-Prozess-IDs für jede bedienende Zelle unterschiedlich ist.

2. Verfahren nach Anspruch 1, wobei:

ein Wert in dem TDRA-Feld einem Zeilenindex in einer TDRA-Tabelle entspricht,
der Zeilenindex eine Mehrzahl von Start- und Längenindikatorwerten, SLIVs, für die Mehrzahl von PDSCHs oder die Mehrzahl von PUSCHs enthält und
jeder der Mehrzahl von SLIVs jedem bzw. jeweils einem der Mehrzahl von PDSCHs oder der Mehrzahl von PUSCHs entspricht.

3. Verfahren nach Anspruch 1 oder 2, ferner umfassend:
Senden, nach dem Empfangen der Mehrzahl von PDSCHs, einer Mehrzahl von Hybrid Automatic Repeat Request-Acknowledgements, HARQ-ACKs, die der Mehrzahl von PDSCHs in einem Slot auf einer der Mehrzahl von bedienenden Zellen entsprechen, basierend auf dem PDSCH-zu-HARQ-Timing-Indikatorfeld.

4. Verfahren nach Anspruch 1, wobei:

jede der Mehrzahl von HARQ-Prozess-IDs jedem bzw. jeweils der Mehrzahl von PDSCHs oder jedem bzw. jeweils der Mehrzahl von PUSCHs entspricht,
die Mehrzahl von HARQ-Prozess-IDs basierend auf einer Mehrzahl von Gruppen von $\log_2(Ni)$-Bits in dem HARQ-Prozessnummernfeld bestimmt werden, und
Ni die Anzahl der HARQ-Prozess-IDs für die bedienende Zelle i ist.

5. Verfahren nach Anspruch 4, wobei:

eine erste HARQ-Prozess-ID der Mehrzahl von HARQ-Prozess-IDs für einen ersten PDSCH der Mehrzahl von PDSCHs oder einen ersten PUSCH der Mehrzahl von PUSCHs basierend auf einer ersten Gruppe von $\log_2(Ni)$-Bits in dem HARQ-Prozessnummernfeld bestimmt wird,
eine zweite HARQ-Prozess-ID der Mehrzahl von HARQ-Prozess-IDs für einen zweiten PDSCH der Mehrzahl von PDSCHs oder einen zweiten PUSCH der Mehrzahl von PUSCHs basierend auf einer zweiten Gruppe von $\log_2(N)$-Bits in dem HARQ-Prozessnummernfeld bestimmt wird, und
eine dritte HARQ-Prozess-ID der Mehrzahl von HARQ-Prozess-IDs für einen dritten PDSCH der Mehrzahl von PDSCHs oder einen dritten PUSCH der Mehrzahl von PUSCHs basierend auf einer dritten Gruppe von $\log_2(N)$-Bits in dem HARQ-Prozessnummernfeld bestimmt wird.

6. Verfahren nach Anspruch 1, wobei:
die Mehrzahl der HARQ-Prozess-IDs durch Gruppieren aufeinanderfolgender $\log_2(Ni)$-Bits bestimmt wird, beginnend mit dem höchstwertigen Bit, MSB, oder dem niedrigstwertigen Bit, LSB, des HARQ-Prozessnummernfelds.

7. Benutzergerät, UE (500) zum Durchführen einer Mehrzahl von Empfangs- oder Sendevorgängen auf einer Mehrzahl von bedienenden Zellen bzw. Dienstzellen, wobei das UE umfasst:

ein oder mehrere nichtflüchtige computerlesbare Medien (534) mit darauf verkörperten computerausführbaren Anweisungen (532); und
zumindest einen Prozessor (528), der mit dem einen oder den mehreren nichtflüchtigen computerlesbaren Medien gekoppelt ist,
wobei die computerausführbaren Anweisungen, wenn sie von dem zumindest einen Prozessor ausgeführt werden, das UE veranlassen, das Verfahren nach einem der Ansprüche 1 bis 6 auszuführen.

8. Basisstation, BS (500), zum Durchführen einer Mehrzahl von Empfangs- oder Sendevorgängen auf einer Mehrzahl von bedienenden Zellen bzw. Dienstzellen, wobei die BS umfasst:

ein oder mehrere nichtflüchtige computerlesbare Medien (534) mit darauf verkörperten computerausführbaren Anweisungen (532); und
zumindest einen Prozessor (528), der mit dem einen oder den mehreren nichtflüchtigen computerlesbaren Medien gekoppelt ist, wobei der zumindest eine Prozessor konfiguriert ist, die computerausführbaren Anweisungen auszuführen zum:

(402) Senden von Steuer- bzw. Regelinformationen zum Terminieren bzw. Planen einer Mehrzahl von Physical Downlink Shared Channels, PDSCHs, oder einer Mehrzahl von Physical Uplink Shared Channels, PUSCHs, auf der Mehrzahl von bedienenden Zellen;

(404) Durchführen, basierend auf den Steuer- bzw. Regelinformationen, von Sendevorgängen der Mehrzahl von PDSCHs auf der Mehrzahl von bedienenden Zellen oder von Empfangsvorgängen der Mehrzahl von PUSCHs auf der Mehrzahl von bedienenden Zellen, wobei die Steuer- bzw. Regelinformationen eine Mehrzahl von Feldern umfassen, wobei die Mehrzahl von Feldern zumindest eines von Hybrid Automatic Repeat Request, HARQ,-Prozessnummernfeld, PDSCH-zu-HARQ-Timing-Indikatorfeld und Time Domain Resource Allocation, TDRA,-Feld umfasst, und das TDRA-Feld zum Zuweisen von Time-Domain-Ressourcen für alle der Mehrzahl von PDSCHs oder alle der Mehrzahl von PUSCHs verwendet wird;

Bestimmen, basierend auf dem HARQ-Prozessnummernfeld, einer Mehrzahl von HARQ-Prozess-IDs, die der Mehrzahl von PDSCHs oder PUSCHs entsprechen;

Bestimmen einer Anzahl von Bits des HARQ-Prozessnummernfelds basierend auf einer Anzahl der Mehrzahl von bedienenden Zellen und einer Anzahl der Mehrzahl von HARQ-Prozess-IDs;

**gekennzeichnet durch**

Bestimmen der Anzahl der Bits des HARQ-Prozessnummernfelds durch eine Gesamtzahl von HARQ-Prozess-IDs für jede bedienende Zelle, wobei:

die Gesamtzahl der HARQ-Prozess-IDs für jede bedienende Zelle über eine Downlink Radio Resource Control, RRC,-Signalisierung bereitgestellt wird, die von einer Basisstation gesendet wird, und die Gesamtzahl der HARQ-Prozess-IDs für jede bedienende Zelle unterschiedlich ist.

## Revendications

1. Procédé réalisé par un équipement utilisateur, UE, (500), destiné à réaliser une pluralité de réceptions ou de transmissions sur une pluralité de cellules de desserte, le procédé comportant :

(302) la réception d'informations de commande pour planifier une pluralité de canaux partagés en liaison descendante physique, PDSCH, ou une pluralité de canaux partagés en liaison montante physique, PUSCH, sur la pluralité de cellules de desserte ;

(304) la réalisation, sur la base des informations de commande, de réceptions de la pluralité de PDSCH sur la pluralité de cellules de desserte ou de transmissions de la pluralité de PUSCH sur la pluralité de cellules de desserte, les informations de commande comportant une pluralité de champs, la pluralité de champs comportant au moins un élément parmi un champ de nombre de processus de requête de répétition automatique hybride, HARQ, un champ d'indicateur de temporisation PDSCH vers HARQ et un champ d'attribution de ressources de domaine temporel, TDRA, et le champ TDRA étant utilisé pour attribuer des ressources de domaine temporel pour l'ensemble de PDSCH de la pluralité de PDSCH ou l'ensemble de PUSCH de la pluralité de PUSCH ;

la détermination, sur la base du champ de nombre de processus HARQ, d'une pluralité d'ID de processus HARQ correspondant à la pluralité de PDSCH ou à la pluralité de PUSCH ;

la détermination d'un nombre de bits du champ de nombre de processus HARQ sur la base d'un nombre de la pluralité de cellules de desserte et d'un nombre de la pluralité d'ID de processus HARQ ; le procédé étant **caractérisé par**

la détermination du nombre des bits du champ de nombre de processus HARQ par un nombre total d'ID de processus HARQ pour chaque cellule de desserte, dans lequel :

le nombre total des ID de processus HARQ pour chaque cellule de desserte est fourni via une signalisation de commande de ressources radio en liaison descendante, RRC, transmise par une station de base et le nombre total des ID de processus HARQ pour chaque cellule de desserte est différent.

2. Procédé selon la revendication 1, dans lequel :

une valeur dans le champ TDRA correspond à un index de ligne dans un tableau TDRA, l'index de ligne inclut une pluralité de valeurs d'indicateur de début et de longueur, SLIV, pour la pluralité de PDSCH ou la pluralité de PUSCH et chaque SLIV de la pluralité de SLIV correspond à chaque PDSCH de la pluralité de PDSCH ou à chaque PUSCH de la pluralité de PUSCH respectivement.

3. Procédé selon la revendication 1 ou 2, comportant en outre :
la transmission, après réception de la pluralité de PDSCH, d'une pluralité d'accusés de réception de requête de répétition automatique hybride, HARQ-ACK, correspondant à la pluralité de PDSCH dans un créneau sur une cellule de la pluralité de cellules de desserte sur la base du champ d'indicateur de temporisation PDSCH vers HARQ.

4. Procédé selon la revendication 1, dans lequel :

chaque ID de la pluralité d'ID de processus HARQ correspond respectivement à chaque PDSCH de la pluralité de PDSCH ou à chaque PUSCH de la pluralité de PUSCH,
la pluralité des ID de processus HARQ sont déterminés sur la base d'une pluralité de groupes de $\log_2(Ni)$ bits dans le champ de nombre de processus HARQ et
Ni est le nombre d'ID de processus HARQ pour la cellule de desserte i.

5. Procédé selon la revendication 4, dans lequel :

un premier ID de processus HARQ de la pluralité d'ID de processus HARQ pour un premier PDSCH de la pluralité de PDSCH ou un premier PUSCH de la pluralité de PUSCH est déterminé sur la base du premier groupe de $\log_2(N)$ bits dans le champ de nombre de processus HARQ,
un deuxième ID de processus HARQ de la pluralité d'ID de processus HARQ pour un deuxième PDSCH de la pluralité de PDSCH ou un deuxième PUSCH de la pluralité de PUSCH est déterminé sur la base du deuxième groupe de $\log_2(N)$ bits dans le champ de nombre de processus HARQ, et
un troisième ID de processus HARQ de la pluralité d'ID de processus HARQ pour un troisième PDSCH de la pluralité de PDSCH ou un troisième PUSCH de la pluralité de PUSCH est déterminé sur la base du troisième groupe de $\log_2(N)$ bits dans le champ de nombre de processus HARQ.

6. Procédé selon la revendication 1, dans lequel :
la pluralité des ID de processus HARQ sont déterminés par un groupement de $\log_2(Ni)$ bits consécutifs, qui démarre avec le bit le plus significatif, MSB, ou le bit le moins significatif, LSB, du champ de nombre de processus HARQ.

7. Équipement utilisateur, UE, (500) permettant de réaliser une pluralité de réceptions ou de transmissions sur une pluralité de cellules de desserte, l'UE comportant :

un ou plusieurs supports non transitoires lisibles par ordinateur (534) ayant des instructions exécutables par ordinateur (532) incorporées ; et
au moins un processeur (528) couplé au(x) support(s) non transitoire(s) lisible(s) par ordinateur,
dans lequel les instructions exécutables par ordinateur, lorsqu'elles sont exécutées par le au moins un processeur, amènent l'UE à réaliser le procédé selon l'une quelconque des revendications 1 à 6.

8. Station de base, BS, (500) permettant de réaliser une pluralité de réceptions ou de transmissions sur une pluralité de cellules de desserte, la BS comportant :

un ou plusieurs supports non transitoires lisibles par ordinateur (534) ayant des instructions exécutables par ordinateur (532) incorporées ; et
au moins un processeur (528) couplé au(x) support(s) non transitoire(s) lisible(s) par ordinateur, le au moins un processeur étant configuré pour exécuter les instructions exécutables par ordinateur pour :

(402) transmettre des informations de commande afin de planifier une pluralité de canaux partagés en liaison descendante physique, PDSCH, ou une pluralité de canaux partagés en liaison montante physique, PUSCH, sur la pluralité de cellules de desserte,
(404) réaliser, sur la base des informations de commande, des transmissions de la pluralité de PDSCH sur la pluralité de cellules de desserte ou des réceptions de la pluralité de PUSCH sur la pluralité de cellules de desserte, les informations de commande comportant une pluralité de champs, la pluralité de champs comportant au moins un élément parmi un champ de nombre de processus de requête de répétition automatique hybride, HARQ, un champ d'indicateur de temporisation PDSCH vers HARQ et un champ d'attribution de ressources de domaine temporel, TDRA, et le champ TDRA étant utilisé pour attribuer des ressources de domaine temporel pour l'ensemble des PDSCH de la pluralité de PDSCH ou l'ensemble des PUSCH de la pluralité de PUSCH ;

déterminer, sur la base du champ de nombre de processus HARQ, une pluralité d'ID de processus HARQ correspondant à la pluralité de PDSCH ou à la pluralité de PUSCH ;

déterminer un nombre de bits du champ de nombre de processus HARQ sur la base d'un nombre de la pluralité de cellules de desserte et d'un nombre de la pluralité d'ID de processus HARQ ; **caractérisé par** la détermination du nombre des bits du champ de nombre de processus HARQ par un nombre total d'ID de processus HARQ pour chaque cellule de desserte, dans lequel :

le nombre total des ID de processus HARQ pour chaque cellule de desserte est fourni via une signalisation de commande de ressources radio en liaison descendante, RRC, transmise par une station de base et

le nombre total des ID de processus HARQ pour chaque cellule de desserte est différent.

frequency

Slot 0 | Slot 1 | ... | Slot x | Slot x+1 | Slot x+2

PDCCH 101

PDSCH 103

HARQ-ACK 105

PDCCH 102

PDSCH 104

HARQ-ACK 106

time

HARQ Process ID: X
NDI: value_a

HARQ Process ID: X
NDI: value_b

EP 4 250 615 B1

FIG. 1

EP 4 250 615 B1

UL

$n_1 = n_2$          $n_3$          $n_4$

$k1_1 = 2$      $k1_2 = 3$      $k1_3 = 3$      $k1_4 = 1$

PDSCH 201    PDSCH 202    PDSCH 203    PDSCH 204

DL

$n_{D,1} = n_{D,2}$      $n_{D,3}$      $n_{D,4}$

# FIG. 2

<u>300</u>

```
┌─────────────────────────────────────────────────────────┐
│   Receive, from a base station (BS), control information  │
│   for scheduling a plurality of physical downlink shared  │
302 │   channels (PDSCHs) or a plurality of physical uplink      │
│   shared channels (PUSCHs) on the plurality of serving    │
│   cells                                                    │
└─────────────────────────────────────────────────────────┘
```

Receive, from a base station (BS), control information for scheduling a plurality of physical downlink shared channels (PDSCHs) or a plurality of physical uplink shared channels (PUSCHs) on the plurality of serving cells — 302

Perform, based on the control information, receptions of the plurality of PDSCHs on the plurality of serving cells or transmissions of the plurality of PUSCHs on the plurality of serving cells — 304

# FIG. 3

400

402 ⌇
| Transmit, to a user equipment (UE), control information for scheduling a plurality of physical downlink shared channels (PDSCHs) or a plurality of physical uplink shared channels (PUSCHs) on the plurality of serving cells |

404 ⌇
| Perform, based on the control information, transmissions of the plurality of PDSCHs on the plurality of serving cells or receptions of the plurality of PUSCHs on the plurality of serving cells |

# FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM INCORPORATED**. Views on multi-cell PDSCH scheduling via a single DCI. *3GPP TSG RAN WG1 Meeting #103-e, October 26th to November 13th, 2020, 3GPP Draft R1-2009278*, 26 October 2020

- **VIVO**. Discussion on joint scheduling. *3GPP TSG RAN WG1 #105-e, May 10th to 27th, 2021, 3GPP Draft R1-2104392*